(19) Europäisches Patentamt / European Patent Office / Office européen des brevets

(11) **EP 4 030 346 A1**

(12) **EUROPEAN PATENT APPLICATION**
published in accordance with Art. 153(4) EPC

(43) Date of publication:
**20.07.2022 Bulletin 2022/29**

(21) Application number: **19944683.2**

(22) Date of filing: **13.09.2019**

(51) International Patent Classification (IPC):
**G06N 3/04** *(2006.01)* **G06T 7/00** *(2017.01)*

(52) Cooperative Patent Classification (CPC):
**G06N 3/04; G06T 7/00**

(86) International application number:
**PCT/JP2019/036101**

(87) International publication number:
**WO 2021/049005 (18.03.2021 Gazette 2021/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **YAMAKAJI Yusuke**
**Tokyo 100-8310 (JP)**
• **FUKUSHIMA Kunihiko**
**Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(54) **INFORMATION PROCESSING DEVICE AND ELECTRONIC APPARATUS EQUIPPED WITH SAME**

(57) An information processing device (100) for processing a signal with a neural network includes: a Fourier transform layer (12) for performing Fourier transform on an input signal (20) and outputting a first amplitude signal (21r) and a first phase signal (21θ); an amplitude connection layer (13A) for multiplying the first amplitude signal (21r) by a first weight matrix (W1) for which a value is to be updated through training, and outputting a second amplitude signal (22r); a phase connection layer (13B) for multiplying the first phase signal (21θ) by a second weight matrix (W2) for which a value is to be updated through training, and outputting a second phase signal (22θ); a complex activation layer (14) for updating at least the second amplitude signal (22r), of the second amplitude signal (22r) and the second phase signal (22θ)), using a complex activation function f in a spatial frequency domain; and an inverse Fourier transform layer (15) for combining the updated signals and performing inverse Fourier transform thereon.

*FIG. 4*

EP 4 030 346 A1

**Description**

<u>TECHNICAL FIELD</u>

The present invention relates to an information processing device and an electronic apparatus including the same.

<u>BACKGROUND ART</u>

In a neural network used for image recognition or the like, images are learned through deep learning to extract features in the images. In recent years, a convolutional neural network (CNN) which can obtain high recognition performance by using convolution operation has been attracting attention. In the CNN, a weight function that undergoes learning by backpropagation is convolved on an input image, the weight function is updated by backpropagation, and the input image and the output result are associated with each other.

In this regard, there is known a method in which an input image is expressed as a set of points in a high-dimensional space, the input image is perturbated using a matrix obtained by smoothing a weighting function, the perturbated input image is subjected to discrete Fourier transform or discrete cosine transform so as to be projected onto a sub space, and the transformed image is inversely transformed to obtain the image that has undergone perturbation (for example, Patent Document 1).

<u>CITATION LIST</u>

<u>PATENT DOCUMENT</u>

Patent Document 1: Japanese Laid-Open Patent Publication JP 2017-49 996 A

<u>SUMMARY OF THE INVENTION</u>

<u>PROBLEMS TO BE SOLVED BY THE INVENTION</u>

In the neural network using convolution operation as described above, i.e., the CNN, recognition accuracy can be improved by forming convolutional layers in a multilayer structure. However, the number of times of matrix calculation to be performed in the convolutional layers increases approximately in proportion to the total number of pixels of an image and therefore the calculation amount is enormous for a large image such as an image with 2048 pixels $\times$ 2048 pixels, for example. Thus, required calculation cost is high and it is difficult to simplify the information processing device.

Calculation in each layer of the conventional CNN corresponds to simulation by a mathematical model based on a brain structure, and it is difficult to grasp the meaning thereof in a physical sense. Therefore, although the entirety of the established CNN can be evaluated on the basis of only a calculation result of the entire CNN, there is a problem that the physical function of each calculation cannot be analyzed on the basis of an input signal and an output signal in the calculation and thus it is impossible to analyze the details of the CNN

The present invention has been made to solve the above problem, and an object of the present invention is to provide an information processing device that can obtain high recognition accuracy in a neural network and allows detailed analysis of the neural network, using a simple device configuration at low cost while reducing the calculation amount in the neural network.

Another object of the present invention is to provide an electronic apparatus capable of control operation at high speed and with high accuracy on the basis of learning and inference with use of the information processing device.

<u>SOLUTION TO THE PROBLEMS</u>

An information processing device according to the present invention is for processing an input signal with a neural network and includes:
a Fourier transform layer for performing Fourier transform on the input signal and outputting a first amplitude signal and a first phase signal; an amplitude connection layer for multiplying the first amplitude signal by a first weight matrix for which a value in the matrix is to be updated through training, and outputting a second amplitude signal; a phase connection layer for multiplying the first phase signal by a second weight matrix for which a value in the matrix is to be updated through training, and outputting a second phase signal; a complex activation layer for updating at least the second amplitude signal, of the second amplitude signal and the second phase signal, using a complex activation function f which is an activation function in a spatial frequency domain; and an inverse Fourier transform layer for combining the second amplitude signal and the second phase signal updated in the complex activation layer, and performing inverse Fourier transform thereon.

The electronic apparatus according to the present invention performs control operation using the above information processing device.

EFFECT OF THE INVENTION

The information processing device according to the present invention can obtain high recognition accuracy in a neural network and allows detailed analysis of the neural network, using a simple device configuration at low cost while reducing the calculation amount in the neural network.

The electronic apparatus according to the present invention is capable of control operation at high speed and with high accuracy.

BRIEF DESCRIPTION OF THE DRAWINGS

FIG. 1       is a diagram showing a configuration example of hardware according to Embodiment 1.
FIG. 2       is a diagram showing a configuration example of a CNN in a first comparative example.
FIG. 3       is a diagram showing a configuration example of a neural network according to Embodiment 1.
FIG. 4       is a detailed diagram of a part of FIG. 3.
FIG. 5       illustrates processing on an input image in Fourier transform according to Embodiment 1.
FIG. 6       illustrates operation of updating an amplitude value using a complex activation function f according to Embodiment 1.
FIG. 7       illustrates an example of the complex activation function f according to Embodiment 1.
FIG. 8       illustrates another example of the complex activation function f according to Embodiment 1.
FIG. 9       illustrates another example of the complex activation function f according to Embodiment 1.
FIG. 10      illustrates another example of the complex activation function f according to Embodiment 1.
FIG. 11      is a diagram showing a configuration example of the neural network according to another example of Embodiment 1.
FIG. 12      shows accuracy of the neural network according to Embodiment 1.
FIG. 13      shows a speed increasing effect by the neural network according to Embodiment 1.
FIG. 14      illustrates operation using a complex activation function f according to Embodiment 3.
FIG. 15      is a diagram showing a configuration example of a part of a neural network according to Embodiment 5.
FIG. 16      is a diagram showing a configuration example of a part of a neural network according to Embodiment 6.
FIG. 17      is a diagram showing a configuration example of a part of a neural network according to Embodiment 7.
FIG. 18      is a diagram showing a configuration example of a part of a neural network according to Embodiment 8.
FIG. 19      is a diagram showing a configuration example of a neural network according to Embodiment 9.
FIG. 20      is a diagram showing a configuration example of a neural network according to Embodiment 10.
FIG. 21      is a diagram showing a configuration example of an air conditioner according to Embodiment 11.
FIG. 22      is a diagram showing a configuration example of an electronic apparatus according to another example of Embodiment 11.

DESCRIPTION OF EMBODIMENTS

Embodiment 1

Configuration example of hardware

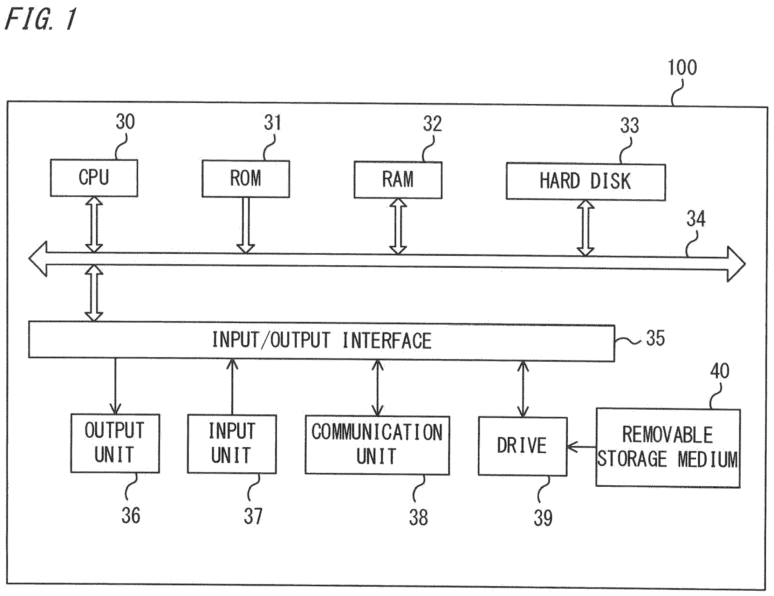

FIG. 1 is a diagram showing the entire configuration of hardware 100 for an information processing device serving as a neural network (hereinafter, referred to as NN) according to Embodiment 1 of the present invention.

The hardware 100 may be a standalone computer, a server of a server client system using a cloud or the like, or a client. Alternatively, the hardware 100 may be a smartphone or a microcomputer. Still alternatively, in a case of assuming the inside of a factory or the like, the hardware 100 may be a computer environment in a network closed in the factory, which is called edge computing.

As shown in FIG. 1, the hardware 100 includes a central processing unit (CPU) 30, and an input/output interface 35 is connected to the CPU 30 via bus wiring 34. When a command is inputted via the input/output interface 35 through, for example, operation on an input unit 37 by a user who uses the NN, the CPU 30 executes a program stored in a read only memory (ROM) 31, in accordance with the command.

Alternatively, the CPU 30 loads a program stored in a hard disk drive (HDD) 33 or a solid state drive (SSD, not shown) onto a random access memory (RAM) 32, and executes the program while performing reading and writing as necessary. Thus, the CPU 30 performs various processes to cause the hardware 100 to operate as a device having a predetermined function.

The CPU 30 outputs results of various processes from an output device which is an output unit 36 via the input/output interface 35, transmits them from a communication device which is a communication unit 38, and/or stores them in the hard disk drive 33, as necessary. The CPU 30 receives various kinds of information from the communication unit 38 via the input/output interface 35 and uses the information by reading the information from the hard disk drive 33, as necessary.

The input unit 37 is formed by a keyboard, a mouse, a microphone, a camera, or the like. The output unit 36 is formed by a liquid crystal display (LCD), a speaker, or the like. The program to be executed by the CPU 30 can be stored in advance in the hard disk drive 33 or the ROM 31 included as a storage medium in the hardware 100. Alternatively, the program may be stored (recorded) in a removable storage medium 40 connectable via a drive 39.

The removable storage medium 40 may be provided as so-called packaged software. Examples of the removable storage medium 40 include a flexible disk, a compact disc read only memory (CD-ROM), a magneto optical (MO) disc, a digital versatile disc (DVD), a magnetic disk, and a semiconductor memory.

The program can be transmitted and received through a system (Com port) such as a world wide web (WWW) for establishing connection between a plurality of hardware units via a wire and/or wirelessly. Further, training described later is performed, and only a weight function obtained through the training can be transmitted and received by the above method.

For example, the CPU 30 causes the hardware 100 to function as an information processing device that performs processing in each layer forming the NN and generates the NN. In this case, the hardware 100 functions as the NN and also functions as a device for generating the NN

Each layer of the NN can be formed by general hardware suitable for parallel calculation such as a graphics processing unit (GPU) or a CPU, or other than these, can be formed by a field-programmable gate array (FPGA), a fast Fourier transform (FFT) calculation architecture, or dedicated hardware.

Matrix calculation such as Fourier transform and inverse Fourier transform described later may be performed by dedicated hardware. In particular, hardware for fast Fourier transform and fast inverse Fourier transform capable of performing Fourier transform and inverse Fourier transform at high speed can be available as general hardware. The dedicated hardware may be included in the CPU or the GPU.

The hardware 100 may include a sensor for the purpose of converting a physical phenomenon such as acoustic waves, electromagnetic waves including visible light, heat, or vibration to numerical data, or a mechanism for outputting an image or a calculation result such as CAD designed in the hardware 100. Alternatively, the hardware 100 may include a mechanism for merging information of the sensor and a calculation result of the hardware 100. Further, the hardware 100 includes a mechanism for driving on the basis of an internal battery or a power supply line.

The hardware 100 may be composed of a plurality of hardware units via a communication port, and training and inference described later may be implemented by respective hardware units 100 having different configurations. The hardware 100 may receive a signal of a sensor connected to different hardware 100 via a communication port, or may receive a plurality of sensor signals via a communication port. A plurality of virtual hardware environments may be prepared in one hardware unit 100, and each virtual hardware may be regarded as individual hardware.

Data used for learning

Data used in the NN is data for supervised learning, unsupervised learning, or reinforcement learning. The NN may be called deep learning or a perceptron. The perceptron is called a single perceptron in a case of having one hidden layer described later, or is called a multilayer perceptron in a case of having two or more hidden layers. The multilayer perceptron is called NN

The supervised learning is a method for, using learning data, learning correct-answer labels associated with the learning data. In the NN, an input signal and an output signal are associated with each other.

The unsupervised learning is a method for performing learning without imparting correct-answer labels to learning data. Known examples include a stacked auto encoder (SAE) formed by multilayered auto encoders and a deep Boltzmann machine (DBM) formed by multilayered restricted Boltzmann machines.

In the reinforcement learning, unlike the supervised learning and the unsupervised learning, deep Q-learning (DQN) is often used in which an expected value obtained in the future is maximized with respect to data which varies from moment to moment, instead of giving a correct answer.

In the present embodiment, a case of using the supervised learning is shown. However, the unsupervised learning may be used. In the case of using the unsupervised learning, multivariate analysis such as data clustering or principal component analysis is performed. In addition, since a two-or-more-dimensional image is generally used as an input image, the reinforcement learning can also be used.

Besides, data in semi-supervised learning in which some of learning data are not imparted with correct-answer labels or transfer learning in which a model that has undergone learning using learning data is applied to another learning data, may be applicable to the present embodiment as long as the conventional CNN can be applied.

In addition, learning types include batch learning in which data to be learned are processed at once and online learning in which, every time data to be learned is provided, learning is performed with the data added. In the present embodiment, a case of using the batch learning is shown. However, the online learning may be used. In both cases, the present embodiment enables load reduction and speed increase of calculation.

Configuration example of CNN as first comparative example

The NN described in the present embodiment is an alternative to the CNN Therefore, before describing the NN of the present embodiment, the CNN as a first comparative example will be described below. The CNN is the most typical technology in deep learning and has high accuracy in inference, and is technology obtained by application of pattern recognition called a neocognitron.

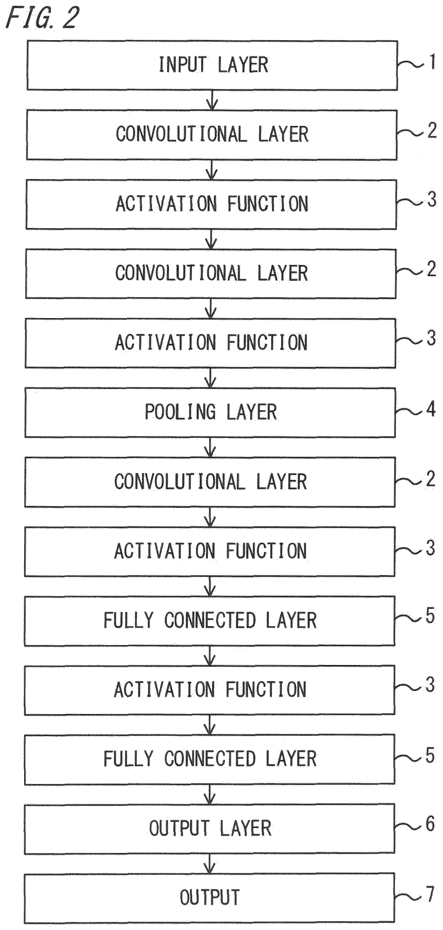

FIG. 2 is a diagram showing a configuration example of the CNN in the first comparative example. As shown in FIG. 2, the CNN has, sequentially from an input layer 1, a convolutional layer 2, an activation function 3, a convolutional layer 2, an activation function 3, a pooling layer 4, a convolutional layer 2, an activation function 3, a fully connected layer 5, an activation function 3, a fully connected layer 5, an output layer 6, and an output 7.

As described above, in the CNN, learning is performed using the convolutional layers 2 and the activation functions 3. An image which is learning data is inputted as an input signal to the input layer 1 and passes through the convolutional layer 2 and the activation function 3. Then, the convolutional layers 2, the activation functions 3, the pooling layers 4, and the fully connected layers 5 are combined several times. Then, the resultant output through the combination passes through the output layer 6 including an error function such as a softmax function, thus obtaining a desired output signal (output 7).

The layers between the input layer 1 and the output layer 6 are called hidden layers. As described above, the case of having two or more hidden layers corresponds to the NN, and the NN is formed by combining a plurality of layers including the input layer and the output layer as appropriate. In the NN, a layer on the input side as seen from a given layer may be referred to as a lower layer and a layer on the output side may be referred to as a higher layer.

In a conventional example, a CNN having more than 150 hidden layers is also known, and in recent years, there has been a tendency of increasing the number of layers in order to enhance the accuracy.

In the supervised learning in which correct-answer labels are imparted, a result outputted through the input layer 1, the hidden layers, and the output layer 6 is compared with the correct-answer label, and an error component thereof is propagated from the output layer 6 to the input layer 1, to optimize weights and biases used in the hidden layers. For optimization, a derivative with respect to the calculation in each layer needs to be calculated. The backpropagation is one method for efficiently calculating a derivative for expressing propagation of error from the output layer 6 to the input layer 1.

In the convolutional layer 2, a kernel (or called a filter) is applied to a map and convolution operation is performed. The kernel is, for example, an image with seven pixels × seven pixels, i.e., a $7 \times 7$ matrix, and in other words, is composed of 49 elements. The kernel is applied to data in the input layer 1 or a map in the connected lower layer and convolution operation is performed, to output the resultant signal to the higher layer.

The convolution operation acts to extract, by the kernel, a characteristic image edge indicated by the input image, from the image. Here, the edge is a boundary such as between an object and an object or between an object and a background image. A plurality of such kernels are prepared and matrices forming the kernels are updated by the above backpropagation. This procedure is called learning.

Next, the convolution operation will be described. A value at a position (i, j) in an input image is denoted by $x_{ij}$. Characters i and j represent integers, and here, are integers not less than 0. In this case, each pixel value is an integer not less than 0. A kernel is set as an image smaller than the input image and has a size of $H \times H$. H is an integer not less than 2. The kernel is represented by an index (p, q) ((p = 0, 1, 2, ..., H - 1), (q = 0, 1, 2, ..., H - 1)), and each value in the image is denoted by $h_{pq}$. At this time, $h_{pq}$ takes any real value. Under this condition, the convolution operation is represented by the following Expression (1). It is noted that $u_{ij}$ is a value in an output image through the convolution operation.

Mathematical 1

$$u_{ij} = \sum_{p=0}^{H-1}\sum_{q=0}^{H-1} x_{i-p,j-q}\, h_{pq} \qquad \cdots (1)$$

In general, convolution operation in deep learning is defined by the following Expression (2). In a field other than deep learning, this is called cross-correlation, or correlation. The correlation in this case yields the same result as in convolution operation when the kernel is inverted in the up-down direction and the left-right direction. Therefore, here, the calculation represented by Expression (2) is referred to as convolution operation.

Mathematical 2

$$u_{ij} = \sum_{p=0}^{H-1}\sum_{q=0}^{H-1} x_{i+p,j+q}\, h_{pq} \qquad \cdots (2)$$

In a spatial frequency domain after Fourier transform described later, difference between the convolution operation and the correlation corresponds to complex conjugate of the Fourier transform for one of xij and hpq. It is noted that, since the kernel is composed of values obtained by learning, it is not necessary to use complex conjugate if the initial values of the kernel are set randomly, but it is desirable to use complex conjugate for the kernel in a case of changing a weight of the initial values.

For reducing the calculation amount of the convolution operation, a method called stride may be used. In a case where the width of stride is an integer s not less than 2, the stride can be represented by the following Expression (3).

Mathematical 3

$$u_{ij} = \sum_{p=0}^{H-1}\sum_{q=0}^{H-1} x_{si+p,sj+q}\, h_{pq} \qquad \cdots (3)$$

Thus, the output image can be reduced to 1/s. However, increasing "s" means that some of the features of the image are likely to be missed, and normally leads to deterioration in performance. Therefore, such operation is not performed unless increasing the speed of learning or inference is essential.

In the convolution operation, while the kernel is slid on the input image, calculation is performed and resultant values are summed. In one convolutional layer 2, if the size of an image in the lower layer (input image) is W×H, and the size of the kernel is U×V, the size of the output image is (W - 2[U/2])×(H - 2[V/2]). In this case, [ ] is an operator for removing digits after the decimal point and rounding to an integer. Since [U/2] and [V/2] are natural numbers, the image after the convolution operation is smaller than the input image before the convolution operation.

If the images before and after the convolution operation are the same size, calculations such as calculation of backpropagation often become easy. Therefore, an image with a width [U/2] and a width [V/2] is added to the outer side of the image after the convolution operation, to increase the size of the output image. This method is called padding. The image added to the outer side may be any image, but the value thereof is often set to 0, which is particularly called zero padding.

In fast Fourier transform and fast inverse Fourier transform described later, the size of the matrix needs to be a power of 2, and therefore it is desirable to make the sizes of the matrix to be inputted and the matrix to be outputted equal to each other by padding.

Next, the activation function 3 which is a nonlinear function is applied to the output signal after the convolution operation in the convolutional layer 2. It is important for the NN (in this case, CNN) that the activation function 3 is nonlinear, and applying the nonlinear function enables expression of any data which could not be expressed with a linear function alone.

As a simple example, a linear function using a constant c, i.e., h(x) = cx, is assumed as an activation function. A function (function from x to y) obtained by stacking the linear function h(x) in three layers is y = h(h(h(x))). However, this function can also be described as y = c·c·c·x, i.e., y = c³x, and thus can also be expressed in one layer. This means that the output y can be expressed as only a linear function with respect to the input x, and there is no point in increasing such hidden layers. Therefore, it is necessary to use a nonlinear function for the activation function.

By using a nonlinear function as the activation function 3, the degree of freedom of a function that can be expressed is increased as the number of layers increases, and a desired relationship between the input signal and the correct-answer label can be established with high accuracy.

As the nonlinear function for the activation function 3, any of the following functions is used:

a Relu function (rectified linear function), g(x) = max(x, 0),
a sigmoid function (or also called a logistic sigmoid function), g(x) = 1/(1 + exp(-x)), or
a hyperbolic tangent function, g(x) = tanh(x).

Besides, various activation functions are known as follows.

Leaky ReLU:

$$g(x) = ax \quad \text{for } x < 0,$$

$$g(x) = x \quad \text{for } x \geq 0.$$

Thresholded ReLU:

$$g(x) = x \quad \text{for } x > \theta,$$

$$g(x) = 0 \quad \text{otherwise.}$$

As an exception, an identity function g(x) = x which is a linear function may be used directly before the output layer 6. However, in order to express any curve, two or more hidden layers using a nonlinear function as the activation function are needed, and therefore the identity function will not be described here.

As described above, in the CNN formed using a plurality of convolutional layers 2 and a plurality of activation functions 3, the values of weights and biases are updated through backpropagation. This update is referred to as a learning process or simply as learning. At the initial stage of learning, pseudo random values are used as the weights and the biases. Besides, an initial value of Xavier or an initial value of He described later, etc., may be used. After the learning process is completed, an output based on the updated weights and biases is obtained.

Then, using the weights and the biases having updated values, inference is performed to estimate an output with respect to the input image. A process of performing the inference is referred to as an inference process or simply as inference.

In normal usage, the learning process is performed by a server client system including a GPU or dedicated hardware.

On the other hand, in the inference, the learning process for reducing error with respect to a correct-answer label is not needed, and calculation is merely performed from the input layer 1 to the output layer 6 using the above weights and biases, to yield an output. Therefore, the calculation amount is small as compared to learning. However, among the layers forming the CNN, the calculation amount in the convolutional layer 2 is large and the calculation takes a time.

In the inference process, a response speed of several seconds or less is often required, but in a general CNN in which the number of convolutional layers 2 is increased to enhance learning accuracy, it is often difficult to obtain a response within a desired time by simple hardware such as a microcomputer. On an edge computer that has only a calculator having a comparatively low calculation capability, such as a smartphone, dedicated hardware for CNN may be mounted, but this causes a problem that the hardware mounting area increases, a processing system is complicated, or the power usage amount increases, for example.

Entire configuration

The present embodiment shows a configuration example of hardware 100 (information processing device) for processing an output signal from a sensor that converts a physical phenomenon such as acoustic waves, electromagnetic waves including visible light, heat, or vibration to numerical data, a signal designed through calculation in the hardware 100, or signals including both of such a sensor signal and a calculation result. Calculation in the hardware 100 is calculation processing using an NN. An input signal may be any signal as long as the signal is a one-or-more-dimensional signal, but in the present embodiment, a case of using a two-dimensional image will be described.

In the NN according to the present embodiment, calculation corresponding to the convolution operation is performed in the spatial frequency domain, and a complex activation function which is an activation function in the spatial frequency domain is applied to the resultant signal after the calculation. That is, an input signal in the spatial domain based on an output signal from the sensor or the like as described above is transformed by Fourier transform to a signal in the spatial frequency domain, and then, in the spatial frequency domain, calculation corresponding to the convolution operation and calculation using the complex activation function are performed. Thereafter, the signal in the spatial frequency domain is subjected to inverse Fourier transform so as to be returned to a signal in the spatial domain, thus obtaining a desired output signal.

In the convolution operation in the CNN shown in the above first comparative example, matrix calculation needs to be performed a plurality of times for one time of the convolution operation, but this one time of the convolution operation in the spatial domain is replaced with one time of matrix calculation in the spatial frequency domain.

In the present embodiment, learning or inference is performed using this feature, whereby the number of calculations can be significantly decreased, so that the calculation time, the calculation amount, and power consumption for calculation can be significantly reduced and the calculation cost can be significantly reduced. Hereafter, the calculation corresponding to the convolution operation in the spatial frequency domain is referred to as complex convolution operation, for convenience sake.

In addition, in the spatial frequency domain, a complex activation function which is a nonlinear function is applied to the resultant signal after the complex convolution operation. In this way, the complex convolution operation and calculation using the complex activation function are performed within a continuous process in the spatial frequency domain. Thus, the above effect of significantly decreasing the number of calculations can be assuredly achieved without being hampered.

Here, as an assumptive case, the following is considered: the convolution operation in the CNN shown in the first comparative example is replaced with the complex convolution operation in the spatial frequency domain and then the activation function in the CNN shown in the first comparative example is used (this case is referred to as second comparative example).

In the second comparative example, it is necessary to perform inverse Fourier transform after the complex convolution operation and then use the activation function on the output result of the inverse Fourier transform. That is, for every complex convolution operation, it is necessary to repeatedly use Fourier transform and inverse Fourier transform before and after the complex convolution operation, and thus significant reduction in calculation cost is hampered.

In the present embodiment, the complex activation function is used after the complex convolution operation. Therefore, if Fourier transform and inverse Fourier transform in hidden layers are each performed once, then, within a continuous process in the spatial frequency domain therebetween, the complex convolution operation and the calculation using the complex activation function can be performed any number of times. Thus, significant reduction in calculation cost can be achieved.

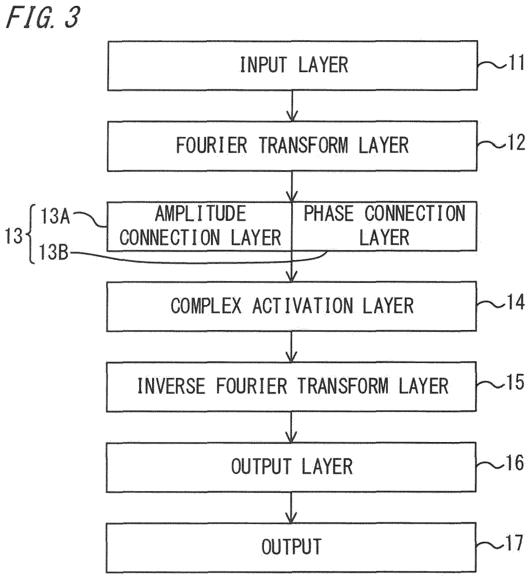

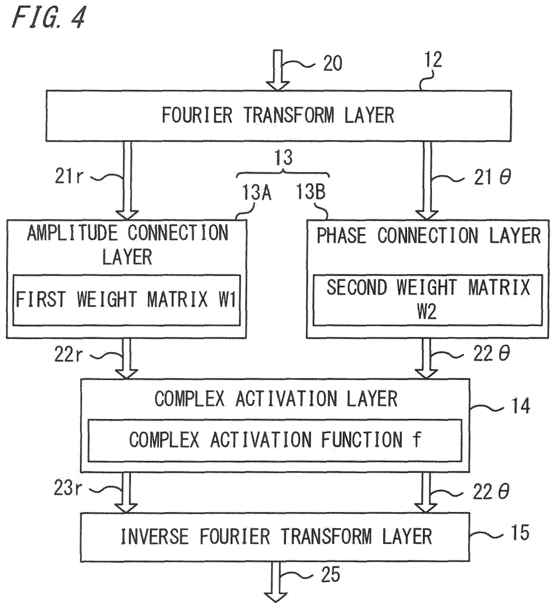

FIG. 3 is a diagram showing a simplest configuration example of the NN according to the present embodiment. As shown in FIG. 3, the NN has, sequentially from an input layer 11, a Fourier transform layer 12, a connection layer 13 which is composed of an amplitude connection layer 13A and a phase connection layer 13B and performs the complex convolution operation, a complex activation layer 14 for performing calculation using a complex activation function f, an inverse Fourier transform layer 15, an output layer 16, and an output 17. FIG. 4 is a detailed diagram of a part of FIG. 3, and also shows signals generated in respective layers.

In this NN, a two-dimensional image is assumed as an input signal 20, and the input layer 11 receives the input signal 20 to be inputted to the NN. The Fourier transform layer 12 performs Fourier transform on the input signal 20 in the spatial domain and outputs a first amplitude signal 21r and a first phase signal 21θ which are signals in the spatial frequency domain. In this case, fast Fourier transform is used.

The amplitude connection layer 13A has a first weight matrix W1 for which a value in the matrix is to be updated through training, and multiplies the first amplitude signal 21r by the first weight matrix W1, to output a second amplitude signal 22r. The phase connection layer 13B has a second weight matrix W2 for which a value in the matrix is to be updated through training, and multiplies the first phase signal 21θ by the second weight matrix W2, to output a second phase signal 22θ.

The complex activation layer 14 updates, of the second amplitude signal 22r and the second phase signal 22θ, at least the second amplitude signal 22r, using the complex activation function f in the spatial frequency domain. In the present embodiment, only the second amplitude signal 22r is updated using the second phase signal 22θ, to be outputted as a third amplitude signal 23r, and the second phase signal 22θ is outputted without being updated.

The inverse Fourier transform layer 15 combines the third amplitude signal 23r and the second phase signal 22θ, and performs inverse Fourier transform thereon, thereby generating a signal 25 in the spatial domain. In this case, fast inverse Fourier transform is used.

Then, the output layer 16 converts the signal 25 from the inverse Fourier transform layer 15 to a desired form, to obtain the output 7, which is outputted from the NN

FIG. 3 and FIG. 4 show a case where one connection layer 13 for performing the complex convolution operation and one complex activation layer 14 for performing calculation using the complex activation function f are provided between the Fourier transform layer 12 and the inverse Fourier transform layer 15, but normally, a plural number of each layer are provided.

The number of rows of the first weight matrix W1 is the same as the number of columns of the amplitude matrix that is the first amplitude signal 21r, and the number of rows of the second weight matrix W2 is the same as the number of columns of the phase matrix that is the first phase signal 21θ. The numbers of columns of the first weight matrix W1 and the second weight matrix W2 are not limited.

In the present embodiment, since fast Fourier transform and fast inverse Fourier transform are used, the amplitude matrix and the phase matrix need to be matrices with a size of a power of 2. Therefore, in the amplitude connection layer 13A and the phase connection layer 13B, the first weight matrix W1 and the second weight matrix W2 for outputting matrices having the same sizes as the amplitude matrix and the phase signal are used.

Input data

As input data, a signal from a sensor for receiving acoustic waves or electromagnetic waves including visible light, a signal from a sensor for acquiring heat or vibration, a signal outputted through calculation in the hardware 100, or a signal obtained by merging such a sensor signal and a calculation result, is used. As the acoustic waves, a signal received by a microphone or an ultrasonic sensor is used.

As the electromagnetic waves, a signal received by a camera for receiving visible light, a camera for receiving infrared rays or ultraviolet rays, a light quantity sensor, a near field antenna, a far field antenna, a magnetic sensor, an electric field/magnetic field sensor, a current sensor, a voltage sensor, or a radiation sensor, is used. Besides, an acceleration sensor, a temperature sensor, a humidity sensor, a gas sensor, a distance sensor, a pressure sensor, an acceleration sensor, or a vibration sensor such as a gyroscope may be used.

Regarding such a sensor signal, it is not always necessary to acquire all data at the same time, and processing may be performed as needed after acquisition of data and thus the data may be treated as one input data. Either a sensor of a contact-sensing type or a sensor of a contactless-sensing type may be used. A signal obtained by combining a signal from a visible light camera and a signal from an infrared camera or the like may be used as input data. By a device for measuring the condition of wind at a long distance using an active phased array antenna or a laser beam, for example, electromagnetic waves or wind in the space may be scanned at high speed, to obtain a two-or-more-dimensional image, which can be used as input data.

The data used as the input data need not be single data, and two or more data may be used in combination. In this case, desired learning can be performed by performing learning with a combination of the NN using the complex activation function shown in the present embodiment and the conventional perceptron.

The hardware 100 according to the present embodiment performs processing on an input signal about a target, obtained from a camera that takes an image with visible light, for example, and outputs an output signal from the output layer. The output signal indicates classification of the input signal, an estimation quantity based on regression analysis, a clustering result, or a multivariate analysis result. The type of the output signal is determined by data (teacher data) imparted with correct-answer labels associated with input signals.

For example, if the hardware 100 is for classifying input signals of images into ten kinds, at the time of learning, data in which input images and correct-answer labels are one-to-one associated with each other is used as teacher data, to perform learning. Using parameters (elements of the weight matrices forming the layers of the NN) obtained through the learning, a signal of an image taken by the camera and the parameters that have undergone the learning are subjected to calculation, to obtain an output signal corresponding to classification.

In addition, processing for outputting a regression signal from an input signal of an image is considered. For example, safety based on the scene of an image is classified into an analog signal of 0 to 100 points. In this case, one real number of 0 to 100 points is imparted as a correct-answer label for one image. A plurality of combinations of such images and correct-answer labels are prepared and used as learning data. Then, as a learning result, parameters in the layers in the NN are determined. Then, using the image obtained from the camera as an input signal, calculation with the above parameters is performed, thus obtaining a regression signal as an output signal.

In the above description, a camera for taking an image with its frequency band corresponding to visible light is used as a sensor. However, also in a case of using a sensor such as an antenna for receiving infrared rays, ultraviolet rays, or electromagnetic waves having a lower frequency than infrared rays, the same processing can be performed by imparting correct-answer labels of classification, regression, or the like with respect to sensor signals.

In the above description, supervised learning has been shown. However, the same applies to unsupervised learning without correct-answer labels.

As an example of unsupervised learning, an auto encoder will be described below. The auto encoder is an information processing device configured to perform unsupervised learning by an NN. The auto encoder uses an input as data for learning and aims to extract features representing the data, i.e., elements of matrices in the layers of the NN. Therefore, the output layer of the NN aims to output the same signal as the input layer, and the sizes of the matrices in the hidden layers between the input layer and the output layer are reduced. In this way, if an equal result can be obtained between the input layer and the output layer even in a case of passing small-sized matrices, the file size of the input signal can be reduced. This is called dimensionality reduction.

Also in the auto encoder, as in the above description, an image taken by a camera is used as an input signal. At this time, correct-answer labels are not needed, and learning is performed while an output of the camera is inputted to the auto encoder.

In a case where a signal outputted through calculation in the hardware 100 is used as an input signal, calculation using a computer aided design (CAD) tool, a simulator for an electromagnetic field, heat, stress, or the like, or another simulator for simulating an environment such as a computer game, may be applied.

In a case of an input signal obtained by merging a sensor signal and a calculation result, a signal obtained by inputting a sensor signal to a simulator or the like is used as an input signal. A signal obtained by changing the type of a sensor or position information thereof as appropriate on the basis of an output of the simulator may be used as an input signal.

Further, a case where a physical signal obtained through manufacturing or simulation based on CAD data is used as a correct-answer label or a case of manually changing a correct-answer label is also applicable to the present embodiment. Examples of a physical signal calculated on the basis of CAD data include an electromagnetic field distribution based on electromagnetic waves, current, voltage, and heat. Regarding electromagnetic waves, CAD data (two-dimensional or three-dimensional image) is used as an input of electromagnetic field simulation, and a simulation result such as S parameters (Scattering parameters), an amplitude value of an electric field/magnetic field at a given position in a space, voltage/current, or a Poynting vector is used as a correct-answer label. Here, the S parameters and the amplitude of the electric field/magnetic field have frequency-dependent property. Therefore, in such a case, a plurality of data are imparted as correct-answer labels for one input image.

The input signals based on the CAD and the simulator described above have one-or-more-dimensional input images. Even in a case of one-dimensional data such as time-series data, the data may be formed as a spectrogram in which time is set on the horizontal axis, the frequency is set on the vertical axis, and the amplitude at each time/each frequency is the amplitude of an output of Fourier transform, whereby the data can be treated as two-dimensional data. As Fourier transform for generating such a spectrogram, short-time Fourier transform is used to perform Fourier transform on a time-by-time basis. In the present embodiment, for the purpose of simplification, a case of using two-dimensional data will be described.

In the present embodiment, a gray-scale image is assumed. In a case of a color image, if the image is based on RGB, the input image is separated into Red, Green, and Blue, so as to be one-dimension higher than the input image. This dimension is called a channel, and in the case of RGB, there are three channels. In a case of CMYK, there are four channels, i.e., Cyan, Magenta, Yellow, and Key plate.

In a case of using a plurality of channels as an input, in general, four channels are converted to one channel through convolution operation using a kernel. In the present embodiment, a method of providing one convolutional layer at a stage before the Fourier transform layer 12, a method of performing Fourier transform on each channel and then making conversion to one channel in a fully connected layer, or a method of merely weighting each channel in advance so that the input signal 20 to be inputted to the input layer 11 has one channel, can be used.

The input layer 11 stores input data which is the input signal 20 to the NN, and passes the input data to the higher layer of the NN

In the present embodiment, a learning result using Mixed National Institute of Standards and Technology database (MNIST) which is generally used for performance evaluation for an NN, is shown. The MNIST has data of gray-scale images with a height-width size of $32 \times 32$, including 60000 data for learning and 10000 data for test not used for learning.

Fourier transform layer and inverse Fourier transform layer

The Fourier transform layer 12 which performs Fourier transform will be described below. The inverse Fourier transform is inverse transform of the Fourier transform, and therefore the details of the inverse Fourier transform and the inverse Fourier transform layer 15 are omitted.

In the Fourier transform, by its nature, transform is performed under the assumption that a two-dimensional image inputted for Fourier transform is infinitely connected in the vertical and horizontal directions as a two-dimensional plane.

If the input image is directly connected in the vertical and horizontal directions, the image becomes discontinuous on a line where image ends are connected, so that a frequency component not included in the original input image might arise. Therefore, normally, in Fourier transform, a window function is applied in each of the vertical and horizontal directions on the image, and thus a signal with an end part made close to zero is subjected to Fourier transform.

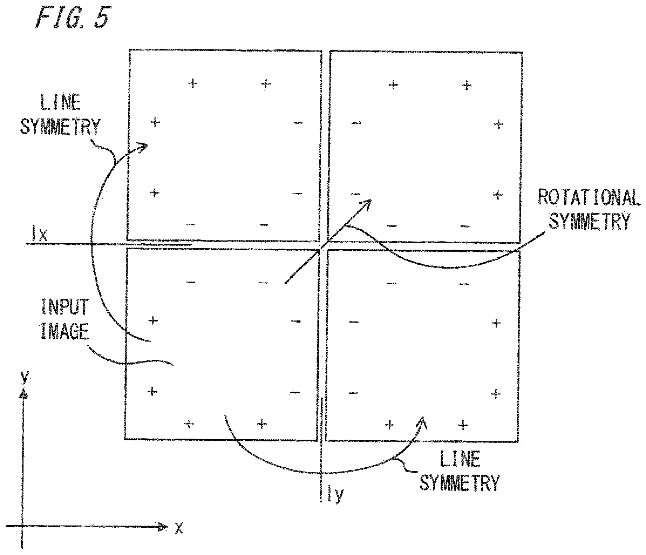

In the method using a window function as described above, if important information to be extracted by the CNN is present at an image end, this information ends up being lost. Accordingly, a method as shown in FIG. 5 is used such that, with respect to the input image before Fourier transform, symmetric images are arranged vertically, horizontally, and diagonally to one image.

Here, the horizontal axis of the input image is defined as x axis and the vertical axis is defined as y axis. At the x-axis component end of the input image, a line-symmetric image with respect to a boundary line ly parallel to the y axis is placed, and at the y-axis component end of the input image, a line-symmetric image with respect to a boundary line 1x parallel to the x axis is placed. Further, at the position diagonal to the input image, a point-symmetric image with respect to the intersection of the two boundary lines 1x and ly, i.e., a rotational-symmetric image rotated by 180 degrees, is placed.

Fourier transform is performed on the image composed of a total of four images obtained by arranging symmetric images vertically, horizontally, and diagonally to one image as described above, whereby it is possible to perform calculation while preventing occurrence of a frequency component not included in the original input image, without using a window function.

In the present embodiment, it is assumed that fast Fourier transform is used as the Fourier transform. Therefore, each of the vertical-direction size and the horizontal-direction size of the input image is a power of 2 and therefore an even number. In the above method of arranging symmetric images vertically, horizontally, and diagonally to one image, the vertical-direction size and the horizontal-direction size of the image composed of the four images are also even numbers and are powers of 2. Therefore, fast Fourier transform can be used.

It is noted that, in the case of using this method, the input image becomes large, so that processing of fast Fourier transform increases. Therefore, this method is not applied in a case where there is no information at image ends and discontinuity does not occur even when the image is directly connected in the vertical and horizontal directions, as in an image of the MNIST.

Also in the inverse Fourier transform, the same processing as described above may be performed before the inverse Fourier transform is performed.

Fourier transform is transform from a signal in the spatial domain to a signal in the spatial frequency domain. The signal in the spatial domain is referred to as a spatial signal, and the signal in the spatial frequency domain after Fourier transform is referred to as a spatial frequency signal.

As described above, the convolution operation on the spatial signal corresponds to multiplication by a matrix for the spatial frequency signal. Specifically, this multiplication is a Hadamard product and is represented by the following expression:

$$F[k*u] = F[k] \odot F[u],$$

where F represents Fourier transform, * represents convolution operation, and $\odot$ represents Hadamard product.

Fourier transform on a signal a(s, t) having a size of m$\times$n in the spatial domain is represented by the following Expression (4). This expression is called discrete Fourier transform. Here, j is a complex number, e is Napier's constant, and $\pi$ is the ratio of the circumference of a circle to its diameter.

Mathematical 4

$$A_{kl} = \sum_{s=0}^{m-1} \sum_{t=0}^{n-1} a(s,t) \cdot e^{-2\pi j \left( \frac{s}{m} + \frac{t}{n} \right)} \qquad \cdots (4)$$

For the Fourier transform, fast Fourier transform (FFT) is used. In the FFT of radix 2, signals of N points are each divided to be halved, and thus can be considered to be radix-2 decimation-in-time Fourier transform.

If n is the size of a two-dimensional image, the calculation order of normal Fourier transform is $O(n^3)$, and the calculation order of the convolution operation is also $O(n^3)$. It is noted that O( ) indicates an approximate value of the number of times of calculation.

The calculation order of fast Fourier transform is $O(n^2 \cdot \log_2 n)$, and the total calculation order of fast Fourier transform and fast inverse Fourier transform (IFFT) is $O(2n^2 \cdot \log_2 n)$. The calculation order of the above-described complex convolution operation which is calculation in the connection layer 13 is $O(n^2)$, which is sufficiently smaller than the other calculation orders $O(n^3)$ and $O(n^2 \cdot \log_2 n)$ and thus can be neglected.

Therefore, the calculation order of the conventional CNN is $O(n^3)$, whereas the calculation order of the NN in the present embodiment is $O(2n^2 \cdot \log_2 n)$, and thus the calculation amount is reduced and the calculation speed can be increased.

As described above, in one CNN, there are normally a plurality of convolutional layers 2. If the number of convolutional layers 2 is m, the calculation order of the CNN is $O(m \cdot n^3)$. In the second comparative example described above, the complex convolution operation is performed instead of the convolution operation, and for every complex convolution operation, Fourier transform and inverse Fourier transform are repeatedly performed before and after the complex convolution operation. Therefore, if fast Fourier transform and fast inverse Fourier transform are used, the calculation order is $O(2m \cdot n^2 \cdot \log_2 n)$. It is noted that the number of times of the complex convolution operation in the second comparative example is equal to a number $\alpha$ of the convolutional layers 2 in the CNN

The calculation order of the NN according to the present embodiment is $O(2n^2 \cdot \log_2 n)$ irrespective of the number of times of the complex convolution operation corresponding to the number of the connection layers 13. On the other hand, in the CNN of the first comparative example, and in the second comparative example, the calculation amount sharply increases as the number m of times of the convolution operation or the complex convolution operation increases.

In a case of an image with a comparatively small size of about ($64 \times 64$) at n = 64, for example, if m is 10, the calculation order of the CNN using the convolution operation is $O(m \cdot n^3) = O(2.6 \times 10^6)$, and the calculation order in the second comparative example is $O(2m \cdot n^2 \cdot \log_2 n) = O(4.9 \times 10^6)$. On the other hand, the calculation order of the NN according to the present embodiment is $O(2n^2 \cdot \log_2 n) = O(4.9 \times 10^5)$, and thus the calculation amount can be reduced and the calculation speed can be increased, by about 10 times.

In a case of an image with a comparatively large size of about ($1024 \times 1024$) at n = 1024, if m is 10, the calculation order of the CNN using the convolution operation is $O(m \cdot n^3) = O(1.0 \times 10^{10})$, and the calculation order in the second comparative example is $O(2m \cdot n^2 \cdot \log_2 n) = O(2.1 \times 10^8)$. On the other hand, the calculation order of the NN according to the present embodiment is $O(2n^2 \cdot \log_2 n) = O(2.1 \times 10^7)$.

That is, in the NN according to the present embodiment, the calculation amount is reduced by ten times as compared to the second comparative example, and is reduced by about a 3-digit scale as compared to the CNN in the first comparative example using the convolution operation. Since the calculation amount directly relates to the calculation time, the above fact means that, for example, calculation that would require one month in the CNN can be performed in about 90 minutes in the NN according to the present embodiment.

As described above, in the present embodiment, as the number of times of the complex convolution operation corresponding to the convolution operation increases, and as the size of the image increases, the effect of reducing the calculation amount increases.

In the CNN, several to several tens of convolutional layers 2 are often stacked and used, but by using the NN of the present embodiment, the calculation amount can be significantly reduced and the calculation speed can be increased. For example, in recent years, some smartphones have fifty million pixels (i.e., output a matrix of $7000 \times 7000$) or more, and some cameras have one hundred million pixels (i.e., output a matrix of $10\,000 \times 10\,000$) or more. In view of the calculation amount, it has been difficult to perform, for such a large-size image, the convolution operation in the CNN without reducing the number of pixels, i.e., without deteriorating information included in the image. However, this can be achieved by using the NN according to the present embodiment.

Thus, the NN according to the present embodiment can reduce the calculation amount and thus enables high-speed calculation, and also can achieve improvement in reliability of calculation.

In fast Fourier transform, using only a signal with a size of a power of 2, or in a case of a two-dimensional image, using only an image with a size of a power of 2 multiplied by 2, calculation is performed at high speed through, for example, butterfly calculation. A general signal is not a matrix having a size of a power of 2, and therefore, the input signal is subjected to zero padding so as to have a size of a power of 2. Thus, it becomes possible to use fast Fourier transform for all signals. The same applies to fast inverse Fourier transform.

In addition, for the first amplitude signal 21r and the first phase signal 21θ obtained through the Fourier transform layer 12, frequency shift operation is performed to switch the order of images so that low-frequency components are concentrated at a center part of data. Thus, low-frequency components are gathered at a center part of the matrix and high-frequency components are gathered at a peripheral part. In many cases, such frequency shift operation is used because there are many signals that include features in low-frequency signals. In the NN according to the present embodiment, discontinuity can occur in processing on an end of an image, and thus is likely to lead to error. Therefore, the frequency shift operation is further effective. Mathematically, the frequency shift operation has no influence on a result.

An expression of the Fourier transform in the Fourier transform layer 12 can be separated as a combination of an amplitude and a phase or a real part and an imaginary part. For calculation in the complex activation layer 14 at a subsequent stage, the expression is separated into an amplitude and a phase, to generate the first amplitude signal 21r and the first phase signal 21θ. At this time, the amplitude is a real number not less than 0. On the other hand, the phase is set to be a real number that is not less than $-\pi$ and is less than $\pi$. In addition, in performing Fourier transform, the above-described padding (normally, zero padding) is performed so that an input signal and an output signal of the Fourier transform layer 12 become matrices having the same size.

In addition, for expressing Fourier transform and inverse Fourier transform, several methods that are different in coefficients or the like are known, and any method may be adopted.

However, depending on the method, some difference may arise in the result. This is because, in the relationship between the input and the output of Fourier transform, the total energy (volume) present in the spatial domain and the total energy present in the spatial frequency domain are different. That is, when inverse Fourier transform is performed after Fourier transform is performed, difference can occur between the signal before input and the outputted signal.

In a case where learning and inference are performed in the NN having the same hidden layers, there is almost no problem, but depending on data, calculation for equalizing the total energy present in the spatial domain and the total energy present in the spatial frequency domain may be performed in accordance with Parseval's identity (or Rayleigh's energy theorem). In addition, in a case where the hardware 100 to be used differs between learning and inference or in a case where round-off error becomes a problem, the Parseval's identity may be used. The same applies to inverse Fourier transform.

Connection layer

Instead of the convolutional layer 2 in the spatial domain, in the present embodiment, the connection layer 13 is used in the spatial frequency domain. In the connection layer 13, a fully connected layer or a sparsely connected layer is used. In particular, a fully connected layer may be used for a layer near the input layer 11, and a sparsely connected layer may be used for a layer near the output layer 16 which is a higher layer, whereby overtraining can be prevented. It is noted that, in the matrix forming the fully connected layer, all the weight matrix elements are updated, but in the matrix forming the sparsely connected layer, there are elements that are not updated with some probability.

In the fully connected layer, calculation represented by the following expression is performed:

$$u = Wx + b,$$

where W is the weight matrix between the connected layers, x is an input matrix, u is an output matrix, and b is a vector as a bias.

In particular, at a part near the output layer 16, the bias vector may be set to zero vector. As the initial values of W and b, normally, pseudo random values are used. As the initial values, a matrix called an initial value of Xavier or an initial value of He may be used, and it is known that learning proceeds fast with such a matrix. This is the same as in the case of the spatial signal and therefore description thereof is omitted.

The connection layer 13 is composed of the amplitude connection layer 13A and the phase connection layer 13B. The spatial signal inputted to the Fourier transform layer 12 is separated into the first amplitude signal 21r and the first phase signal 21θ which are spatial frequency signals, through Fourier transform. Then, the first amplitude signal 21r is inputted to the amplitude connection layer 13A and the first phase signal 21θ is inputted to the phase connection layer 13B, and the respective signals are multiplied by the first and second weight matrices W1 and W2 as the above-described weight matrices, whereby the second amplitude signal 22r and the second phase signal 22θ are outputted.

That is, in the amplitude connection layer 13A, the first amplitude signal 21r is multiplied by the first weight matrix W1, to output the second amplitude signal 22r. In the phase connection layer 13B, the first phase signal 21θ is multiplied by the second weight matrix W2, to output the second phase signal 22θ.

The initial values of the first weight matrix W1 and the second weight matrix W2 are set to pseudo random values or other initial values as described above.

Then, in the amplitude connection layer 13A and the phase connection layer 13B, for each of the first weight matrix W1 and the second weight matrix W2, values in the matrices are updated by backpropagation so that the input and the output are closely related to each other. That is, for the first weight matrix W1 and the second weight matrix W2, values in the matrices are updated through training.

For the amplitude matrix (input matrix) x as the first amplitude signal 21r, the first weight matrix W1 is assumed to have only positive real numbers. Since the amplitude matrix x is formed by positive real numbers, each element of a matrix of (W1)x may be converted to an absolute value |(W1)x|, but in this case, learning is performed with constraints set on the first weight matrix W1 so as to have only positive real numbers.

By providing constraints, the search range in learning can be reduced, so that the number of calculations can be decreased. In addition, calculation for absolute value conversion is not needed for each element, whereby the learning speed can be increased.

For the phase matrix (input matrix) x as the first phase signal 21θ, no constraints are set on the second weight matrix W2. In a case of using radian for the phase, modulo operation by $2\pi$ is performed on a matrix of (W2)x so that the value becomes a value that is not less than 0 and is less than $2\pi$ or a value that is not less than $-\pi$ and is less than

$\pi$. However, in a case of using the complex activation function f for applying a trigonometric function to the phase matrix in the complex activation layer 14 at the subsequent stage, modulo operation need not be performed.

An angle unit "degree" which is calculated by multiplying radian by $180/\pi$ may be used for the phase, and in this case, modulo operation by 360° is performed.

Complex activation layer

In the complex activation layer 14, the second amplitude signal 22r and the second phase signal 22θ outputted from the amplitude connection layer 13A and the phase connection layer 13B are inputted, and these signals are subjected to calculation using the complex activation function f which is an activation function in the spatial frequency domain. In this case, through the calculation using the complex activation function f, the second amplitude signal 22r is updated to be outputted as the third amplitude signal 23, while the second phase signal 22θ is outputted as it is.

In the complex activation layer 14, in accordance with a response of the complex activation function f to a phase θ(i) at a point i in the phase matrix forming the second phase signal 22θ, the value of an amplitude r(i) at a point at the same position as the above point i in the amplitude matrix forming the second amplitude signal 22r is updated.

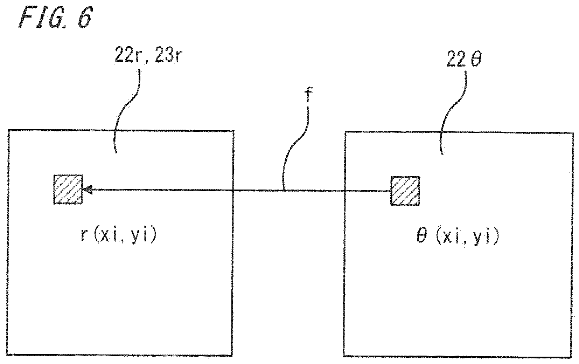

FIG. 6 illustrates operation of updating the value of the amplitude r(i), using the complex activation function f. Here, the position of the point i in the phase matrix (second phase signal 22θ) is denoted by (xi, yi). The value of the complex activation function f with respect to a phase θ(xi, yi) which is the element at the point i is calculated, and an amplitude r(xi, yi) which is an element, at the same position (xi, yi) as the point i in the phase matrix, in the amplitude matrix (second amplitude signal 22r) at the same frequency, is rewritten. The rewritten amplitude matrix becomes the third amplitude signal 23r.

The complex activation function f which is the activation function in the spatial frequency domain will be described below.

For the complex activation function f, a nonlinear function is used, as in the activation function in the spatial domain. A nonlinear function can be defined as a function that does not satisfy one or both of the following definitions of a linear function g:

$$g(x + y) = g(x) + g(y),$$

and

$$g(k \cdot x) = k \cdot g(x)$$

where k is a given constant and x and y are given variables.

Examples of the activation function in the spatial domain include a logistic function and a hyperbolic tangent function. By applying such a nonlinear function, difference arises between forward propagation and backward propagation, and this produces a function that cannot be represented by a linear function alone, i.e., produces weighting.

The complex activation function f in the present embodiment is a function for applying such a nonlinear function to the spatial frequency signal after Fourier transform.

The complex activation function f is different from the conventional activation function for the spatial signal. In addition, even if Fourier transform is performed including the activation function, the complex activation function f cannot be generated. This is obvious also from the following expression:

$$F[g(x)] \neq F[g] \odot F[x],$$

where g is an activation function in the spatial domain.

That is, a result obtained by applying the activation function g to a value x in the spatial domain and then performing Fourier transform thereon, and a result obtained by performing Fourier transform on the activation function g and performing Fourier transform on a value x and then multiplying both, are different from each other.

For example, if a Relu function is subjected to Fourier transform, the Fourier transform diverges because the Relu function monotonically increases in a region of $x \geq 0$. Therefore, a result obtained by performing Fourier transform on the Relu function is not an activation function in the spatial frequency domain.

In the present embodiment, the complex activation function f based on the feature of the Relu function is referred to as a complex Relu function, and is used.

The Relu function in the spatial domain yields the same value as the input value when the input value is positive or zero, and yields zero when the input value is negative. The complex Relu function is not determined by only one of the amplitude r or the phase θ, but acts to update the amplitude component by using a function for applying a trigonometric function to a phase component.

In this case, by using such a function as to apply a trigonometric function to a phase component and then multiply the result by an amplitude component, calculation is performed such that, if one of a real-axis component or an imaginary-axis component, e.g., a real-axis component is positive or zero, the amplitude component remains the same value without being updated, and if the one component is negative, the amplitude component is updated to the calculated value based on the function.

That is, with respect to the phase θ(i) at each point i in the matrix forming the second phase signal 22θ, by a response that differs between a case where one of the real-axis component or the imaginary-axis component is positive or zero and a case where the one is negative, the complex activation function f updates the value of the amplitude r(i) at a point at the same position as the point i in the matrix forming the second amplitude signal 22r.

An example of the complex activation function f using the complex Relu function is shown by the following Expression (5).

Mathematical 5

$$ f(r, \theta) = \begin{cases} r \left| \sin \theta \right| & when \quad -\pi \leqq \theta < -\dfrac{\pi}{2} \quad or \quad \dfrac{\pi}{2} \leqq \theta < \pi \\ \\ r & when \quad -\dfrac{\pi}{2} \leqq \theta < \dfrac{\pi}{2} \end{cases} $$

$$ \cdots (5) $$

In this case, when θ is -π/2 or π/2, r|sinθ| is equal to r, and therefore continuity of the function is ensured.

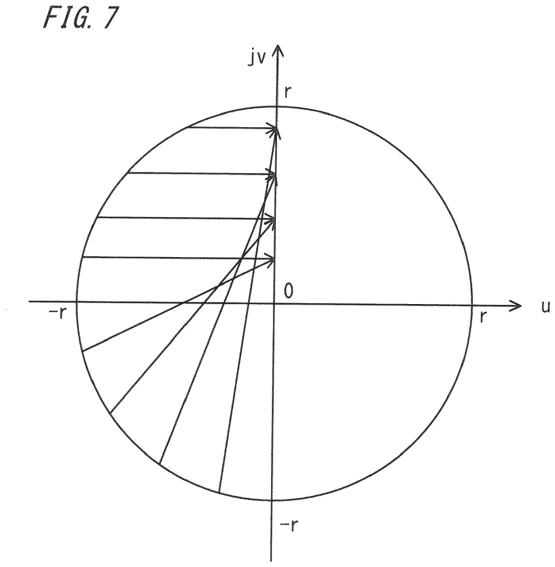

FIG. 7 shows the above Expression (5) in a graph. As shown in FIG. 7, where a circle with a radius r is set and a real axis and an imaginary axis are respectively denoted by u and jv, if the u-component is negative, the u-component is converted to zero, and the jv-component is converted to |jv|. This is equivalent to converting the amplitude r to the absolute value of rsinθ when the component on the real axis u is negative.

Another example of the complex activation function f using the complex Relu function is shown by the following Expression (6).

Mathematical 6

$$ f(r, \theta) = \begin{cases} r \left| \cos \theta \right| & when \quad -\pi \leqq \theta < 0 \\ r & when \quad 0 \leqq \theta < \pi \end{cases} \qquad \cdots (6) $$

Also in this case, continuity of the function is ensured.

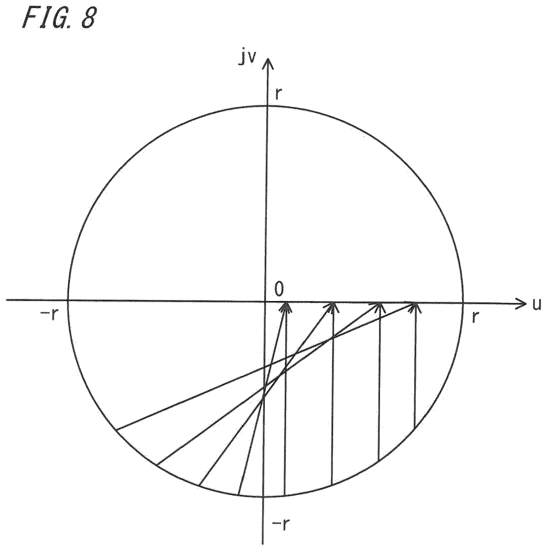

FIG. 8 shows the above Expression (6) in a graph. This case is equivalent to replacing the amplitude r with the absolute value of rcosθ when the component on the imaginary axis jv is negative. This is equivalent to calculation in a case of substituting (θ + (π/2)) into θ of the above Expression (5), but is superior to the complex activation function f using the complex Relu function shown by the above Expression (5), in terms of ease in program creation and decrease in the number of times of comparison, i.e., increase in the calculation speed. In addition, the number of times of comparison of θ can also be decreased, whereby the calculation amount can be reduced.

The above two Expressions (5) and (6) may be modified into various forms as long as continuity of r with respect to θ is ensured. For example, θ may be replaced with (θ/2), to change the region of 0, or a hyperbolic secant sechθ may be used instead of |sinθ|.

Further, the complex activation function f may be defined by the following Expression (7), where k is a real number greater than 1.

Mathematical 7

$$f(r,\theta) = \begin{cases} \dfrac{(k^2-1)r}{2}\left(\dfrac{1}{k+\cos\theta} - \dfrac{1}{k+1}\right) & when \quad 0 \leqq \theta < \pi \\ 0 & when \quad -\pi \leqq \theta < 0 \end{cases}$$

$$\cdots (7)$$

As described above, the complex activation function f only needs to be configured such that values that the amplitude r can take are divided into two or more depending on the phase θ, and the conditions of θ may be divided into three or more.

In the above description, the complex activation function f is a continuous function. However, a discontinuous function may be used.

Conventionally, in the spatial domain, a step function which is a discontinuous function is sometimes used as the activation function. A step function is represented by the following Expression (8). Alternatively, considering singularity at x = 0, a step function may be represented by Expression (9).

Mathematical 8

$$g(x) = \begin{cases} 0 & when \quad x < 0 \\ 1 & when \quad x \geqq 0 \end{cases} \qquad \cdots (8)$$

Mathematical 9

$$g(x) = \begin{cases} 0 & when \quad x < 0 \\ \dfrac{1}{2} & when \quad x = 0 \\ 1 & when \quad x > 0 \end{cases} \qquad \cdots (9)$$

Also in the spatial frequency domain, continuity of the complex activation function f is not an essential condition, and the complex activation function f only needs to be a nonlinear function and be configured to rewrite the amplitude r depending on an output calculated from the value of the phase θ.

The complex activation function f using a complex Relu function not having continuity is represented by the following Expression (10), for example.

Mathematical 10

$$f(r,\theta) = \begin{cases} r\cos\theta & when \quad -\pi \leqq \theta < 0 \\ r & when \quad 0 \leqq \theta < \pi \end{cases} \qquad \cdots (10)$$

The above Expression (10) is obtained by eliminating the absolute value calculation from the above Expression (6), and thus no longer has continuity and does not correspond to the Relu function in the spatial domain. However, owing to elimination of the absolute value calculation, the learning period of the NN can be shortened.

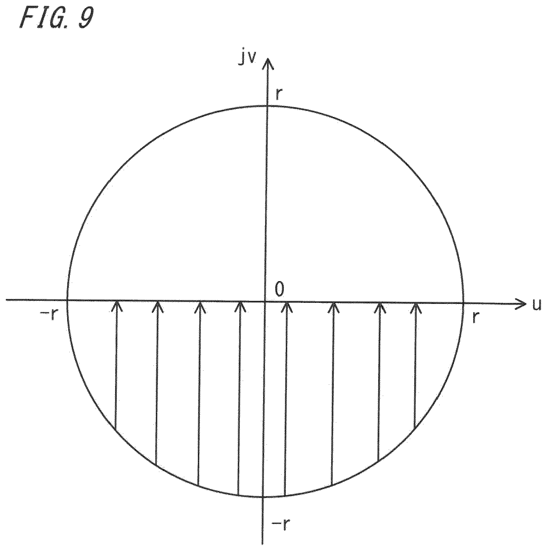

FIG. 9 shows the above Expression (10) in a graph. As shown in FIG. 9, with respect to a circle of a radius r, when the component on the imaginary axis jv is negative, a projection thereof on the real axis u corresponding to jv = 0 is obtained.

Another example of the complex activation function f not having continuity is shown by the following Expression (11).

Mathematical 11

$$f(r,\theta) = \begin{cases} r\sin\theta & when \quad -\pi \leq \theta < -\dfrac{\pi}{2} \quad or \quad \dfrac{\pi}{2} \leq \theta < \pi \\ r & when \quad -\dfrac{\pi}{2} \leq \theta < \dfrac{\pi}{2} \end{cases}$$

$$\cdots (11)$$

The above Expression (11) is obtained by eliminating the absolute value calculation from the above Expression (5). Also in this case, discontinuity is lost and the function does not correspond to the Relu function in the spatial domain. However, owing to elimination of the absolute value calculation, the learning period of the NN can be shortened.

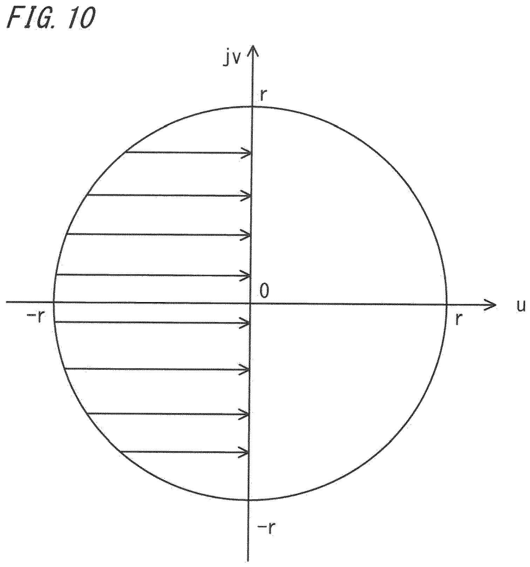

FIG. 10 shows the above Expression (11) in a graph. As shown in FIG. 10, with respect to a circle of a radius r, when the component on the real axis u is negative, a projection thereof on the imaginary axis jv corresponding to u = 0 is obtained.

Training

In a case of updating the weight matrix W (first weight matrix W1, second weight matrix W2) of the NN, searching for an optimum value of each element in the weight matrix W is performed in order to minimize loss L which is difference between the output of the NN and the teacher data. Backpropagation is a method for searching for the optimum value, and is based on gradient descent.

In gradient descent, the weight matrix W is updated on the basis of the following Expression (12), using the weight matrix W, a learning coefficient $\alpha$, and loss L which is a difference component between an inference result and a correct-answer label.

Mathematical 12

$$W \leftarrow W - \alpha \frac{\partial L}{\partial W} \qquad \cdots (12)$$

Then, $\partial L/\partial W$ (a partial derivative of the loss L with respect to the weight matrix W) to be calculated in gradient descent is calculated through backpropagation in which forward propagation and backward propagation are repeated, whereby the weight matrix W is updated. A process from the input layer to the output layer is referred to as forward propagation, and a process from the output layer to the input layer is referred to as backward propagation.

The calculation for updating the weight matrix W corresponds to learning, and the learning process corresponds to training. Completion of the training means completion of learning of the NN. It is noted that data used for training is called training data and is used in the same meaning as the learning data.

While training is performed using the training data, early stopping may be used so that learning is stopped at a time when desired performance set before the learning is met. This leads to prevention of overtraining and shortening of the learning period. In this regard, there is no difference between the present embodiment and the technology of the CNN carried out in the spatial domain.

The gradient descent will be described below.

The gradient descent is an algorithm used for searching for a solution in order to minimize (in general, optimize) an objective function. In particular, in the NN, stochastic gradient descent shown by the above Expression (12) is used, and this is a method generally used when an objective function to be minimized is differentiable.

Here, the learning coefficient $\alpha$ is an important parameter for gradient descent, and various methods such as an AdaGrad method, an Adam method, and a momentum method are known. Also in learning in the spatial frequency domain, these methods are applicable in the same manner as in learning in the spatial domain, and the detailed description thereof is omitted.

However, in general, regarding a minimization method for a nonlinear function, if an objective function is twice differentiable, convergence to a solution is reached earlier in a Newton method or a quasi-Newton method derived therefrom. In addition, in the gradient descent methods such as the AdaGrad method, the Adam method, and the momentum method, the convergence speed and accuracy greatly depend on the value of the learning coefficient $\alpha$. Therefore, it is desirable to use the Newton method or the quasi-Newton method. In a case of using a complicated NN, it is often difficult to calculate a second derivative, and therefore gradient descent is used practically.

By optimizing the objective function as described above, it is possible to establish the weight matrix W that closely associates the input data and the correct-answer label with each other. However, the purpose of learning is to make it possible to perform correct inference not for training data (input data and correct-answer label) used for the learning but for an unknown sample given after the learning. Error with respect to the former training data is called training error, and an expected value of error with respect to the latter unknown data is called generalization error. Reduction of the generalization error is the purpose of learning, but unlike the training error, the generalization error cannot be calculated during learning.

Accordingly, the following method is used: a sample set is prepared separately from the training data, and error calculated for the sample set by the same method as for the training error is used as a criterion for generalization error. For example, in a case of using MNIST data, 70 % to 80 % of all data are set as training data and the remaining data of 20 % to 30 % are set as test data, and then test error which is error with respect to the test data is calculated using the test data after learning. Specifically, the number of training data is set to 60000, and the number of test data is set to 10000. Change in the test error through update of the weight matrix W is called a learning curve.

As the training is continued, the test error is expected to be reduced, but there is a case where error with respect to the test data increases even though error with respect to the training data is reduced. This is called overtraining (or overfitting) and is a phenomenon that becomes a problem in training of the NN. As a method for preventing this, weight decay and dropout directed to prevention of overtraining are known. Also in the present embodiment, these methods are used as appropriate in the same manner as in the case of CNN

The weight decay is a method of updating the weight so as to approach zero as the magnitude of a value of the weight matrix becomes greater. Thus, divergence of the weight is suppressed. For weight decay, various methods such as regularization are known, and there are no constraints in applying such a method in the spatial frequency domain, as in the spatial domain.

Meanwhile, in dropout, a component of the amplitude matrix is made to be zero with some probability in a dropout layer, whereby overtraining can be prevented. Normally, the probability is set at 20 % to 50 %.

In addition, overtraining is likely to occur also when the amount of the learning data is small. In this case, data augmentation is performed. Specifically, for each of images, geometric transformations such as translation, left/right mirror inversion, and rotation, and other operations such as shading, color change, and random noise addition, are uniformly applied. Increasing data as described above facilitates prevention of overtraining, and the same applies in the present embodiment.

Further, overtraining may be prevented by a method of using a sparsely connected layer instead of a fully connected layer, or by imparting a hidden layer with property of early stopping or decreasing significant digits of a calculation result or the like.

Next, backpropagation will be described.

Forward propagation is used in inference for estimating a result using the weight matrix that has undergone learning. In addition, in updating the weight matrix through training, forward propagation and backward propagation are performed a plurality of times.

In the forward propagation, matrices or functions in hidden layers are applied to input data as needed. On the other hand, in the backward propagation, error information about error that is difference between the correct-answer label and the inferred value obtained by forward propagation is propagated backward from the adjacent higher layer to the adjacent lower layer.

The backward propagation can be expressed by a chain rule of differentiation of the forward propagation, and since calculation of mathematical expressions is complicated and the calculation amount is large, the backpropagation is used. In the backpropagation, an error component starting from the output layer is propagated from a higher layer to a lower layer, and a derivative term in the processing at the time of forward propagation is calculated with the error component, thus performing propagation to the input layer. A value of the weight matrix is updated so as to reduce the error component.

Also for the complex activation function f used in the present embodiment, differentiation is needed.

Here, the complex activation function f is assumed to be represented by the above Expression (5), i.e., the following complex Relu function.

18

Mathematical 13

$$f(r,\theta)=\begin{cases} r\,|\sin\theta| & when \quad -\pi \leqq \theta < -\dfrac{\pi}{2} \;\; or \;\; \dfrac{\pi}{2} \leqq \theta < \pi \\[2em] r & when \quad -\dfrac{\pi}{2} \leqq \theta < \dfrac{\pi}{2} \end{cases}$$

Regarding the above expression, y is defined as y = f(r, θ). Then, partial derivative terms $\partial r$ and $\partial \theta$ are represented by the following Expression (14).

Mathematical 14

$$\partial r = \frac{\partial L}{\partial y}\,|\sin\theta|\;,\quad \partial\theta = \frac{\partial L}{\partial y}\,y$$
$$when \quad -\pi \leqq \theta < -\frac{\pi}{2} \;\; or \;\; \frac{\pi}{2} \leqq \theta < \pi$$

$$\partial r = \frac{\partial L}{\partial y}\;,\quad \partial\theta = \frac{\partial L}{\partial y} \quad when \quad -\frac{\pi}{2} \leqq \theta < \frac{\pi}{2}$$

$$\cdots (14)$$

At this time, $\partial r$ serves as an expression for updating r from the higher layer to the lower layer, and $\partial \theta$ serves as an expression for updating θ from the higher layer to the lower layer. Then, each element in the first weight matrix W1 to be multiplied with the first amplitude signal 21r and the second weight matrix W2 to be multiplied with the first phase signal 21θ is updated through substitution.

In addition, the complex activation function f is assumed to be represented by the above Expression (11), i.e., the following complex Relu function.

Mathematical 15

$$f(r,\theta)=\begin{cases} r\sin\theta & when \quad -\pi \leqq \theta < -\dfrac{\pi}{2} \;\; or \;\; \dfrac{\pi}{2} \leqq \theta < \pi \\[2em] r & when \quad -\dfrac{\pi}{2} \leqq \theta < \dfrac{\pi}{2} \end{cases}$$

Regarding the above expression, y is defined as y = f(r, θ). Then, partial derivative terms $\partial r$, $\partial \theta$ are represented by the following Expression (16).

Mathematical 16

$$\partial r = \frac{\partial L}{\partial y} \sin \theta , \quad \partial \theta = \frac{\partial L}{\partial y} y$$

$$when \quad -\pi \leqq \theta < -\frac{\pi}{2} \quad or \quad \frac{\pi}{2} \leqq \theta < \pi$$

$$\partial r = \frac{\partial L}{\partial y} , \quad \partial \theta = \frac{\partial L}{\partial y} \quad when \quad -\frac{\pi}{2} \leqq \theta < \frac{\pi}{2}$$

$$\cdots (16)$$

In addition, the complex activation function f is assumed to be represented by the above Expression (6), i.e., the following complex Relu function.

Mathematical 17

$$f(r,\theta) = \begin{cases} r|\cos \theta| & when \quad -\pi \leqq \theta < 0 \\ r & when \quad 0 \leqq \theta < \pi \end{cases}$$

Regarding the above expression, y is defined as y = f(r, θ). Then, partial derivative terms ∂r, ∂θ are represented by the following Expression (18).
Mathematical 18

$$\partial r = \frac{\partial L}{\partial y}|\cos \theta| , \quad \partial \theta = \frac{\partial L}{\partial y} y \quad when \quad -\pi \leqq \theta < 0$$

$$\partial r = \frac{\partial L}{\partial y} , \quad \partial \theta = \frac{\partial L}{\partial y} \quad when \quad 0 \leqq \theta < \pi$$

$$\cdots (18)$$

In addition, the complex activation function f is assumed to be represented by the above Expression (10), i.e., the following complex Relu function.

Mathematical 19

$$f(r,\theta) = \begin{cases} r\cos \theta & when \quad -\pi \leqq \theta < 0 \\ r & when \quad 0 \leqq \theta < \pi \end{cases}$$

Regarding the above expression, y is defined as y = f(r, θ). Then, partial derivative terms ∂r, ∂θ are represented by the following Expression (20).
Mathematical 20

$$\partial r = \frac{\partial L}{\partial y}\cos\theta \ , \quad \partial\theta = \frac{\partial L}{\partial y}\, y \qquad when \quad -\pi \leqq \theta < 0$$

$$\partial r = \frac{\partial L}{\partial y} \ , \quad \partial\theta = \frac{\partial L}{\partial y} \qquad when \qquad 0 \leqq \theta < \pi$$

$$\cdots (20)$$

As the complex activation function f becomes more complicated, it becomes more difficult to represent derivatives in mathematical expressions. In such a case, numerical differentiation is used in which a change $\Delta y$ when $\theta$ is changed by a small amount $\Delta\theta$, i.e., $(\Delta y/\Delta\theta)$, is used as a derivative. If a derivative is formulated, the calculation thereof is finished with substitution. On the other hand, in numerical differentiation, subtraction or division is needed and thus the calculation amount increases, but a derivative can be calculated for any complex activation function f.

As described above, in backpropagation, $\partial L/\partial W$ for propagating the loss L backward is calculated. Here, two functions for converting a matrix to a matrix are defined, and referred to as intermediate values Y, Z. An inputted matrix and an outputted matrix are assumed to have an equal size. Then, the input X, the weight matrix W, and the intermediate values Y, Z are treated as matrices, and the loss L is treated as a scalar.

In backpropagation, $\partial L/\partial Z$, $\partial L/\partial Y$, $\partial L/\partial X$, and $\partial L/\partial W$ are calculated for calculating $\partial L/\partial W$. At this time, the sizes of the respective matrices are equal to Z, Y, X, and W. Since $\partial L/\partial Z$, $\partial L/\partial Y$, $\partial L/\partial X$, and $\partial L/\partial W$ are uniquely determined, for calculating these, a chain rule which is general calculation for a partial derivative is used.

This backpropagation is very convenient for incorporating a mathematical expression into a program, and therefore is widely used in training.

Output layer

The output layer 16 will be described below. The output layer 16 uses an activation function that is a function for transforming a signal so as to obtain a desired output 7. In the present embodiment, the activation function used in the output layer 16 is referred to as an output activation function.

In supervised learning, since pairs of input data and correct-answer labels are provided, it is necessary to measure the criterion for closeness between an output result of the output activation function and the teacher data. This criterion is referred to as an error function in the present embodiment.

In general supervised learning, an output required in the NN is roughly classified into three types. A first type is regression analysis, a second type is multiclass classification, and a third type is binary classification. Hereinafter, these will be described in order.

The regression analysis is a method of determining such a function as to reproduce training data with respect to a function that takes continuous values as outputs. In this case, as the output activation function in the NN, a function whose value range coincides with the value range of a function as an objective is selected. In a case where the value range is -1 to 1, a hyperbolic tangent function $y = \tanh(x)$ is suitable. In a case where the value range is $-\infty$ to $\infty$, an identity function $y = x$ is often selected. In addition, as difference between an output result of the output activation function and a correct-answer label, squared error is used. Considering differentiation in backpropagation, squared error multiplied by 1/2 is generally used as the error function.

Next, in multiclass classification, input data are classified into a finite number of classes. For example, the MNIST is for a multiclass classification problem, and handwritten characters of numbers 0 to 9 in the input are classified into ten kinds. In such multiclass classification, a softmax function is used as the output activation function. In addition, cross entropy is used as the error function. The softmax function and the cross entropy are the same as in the method in the spatial domain.

Next, in binary classification, input data are classified into two kinds. In this case, a logistic function is used as the output activation function, and the same method as in maximum likelihood estimation is used for the error function. However, the binary classification may be considered to be one type of multiclass classification, that is, a softmax function may be used as the output activation function and cross entropy may be used as the error function, as in multiclass classification.

As described above, in the present embodiment, the complex activation function f is used after the complex convolution operation of multiplying the weight matrix W in the connection layer 13, and thus, if Fourier transform and inverse Fourier transform in hidden layers are each performed once, then, within a continuous process in the spatial frequency domain therebetween, calculations in the connection layer 13 and the complex activation layer 14 can be performed any number of times.

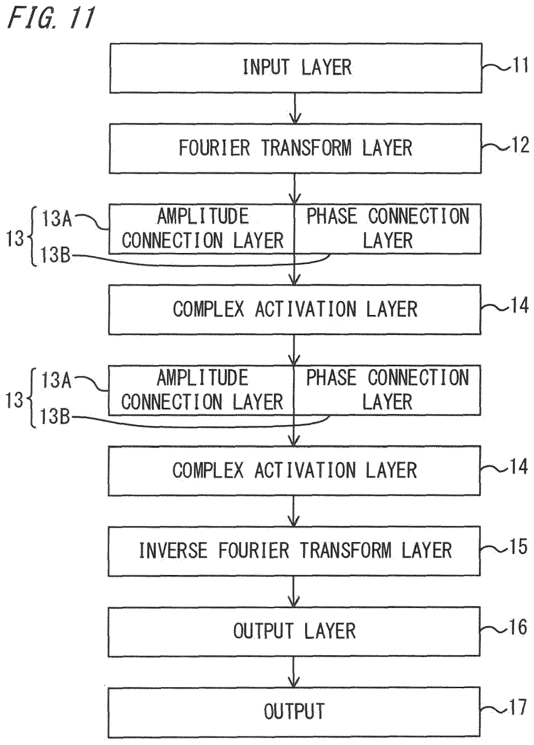

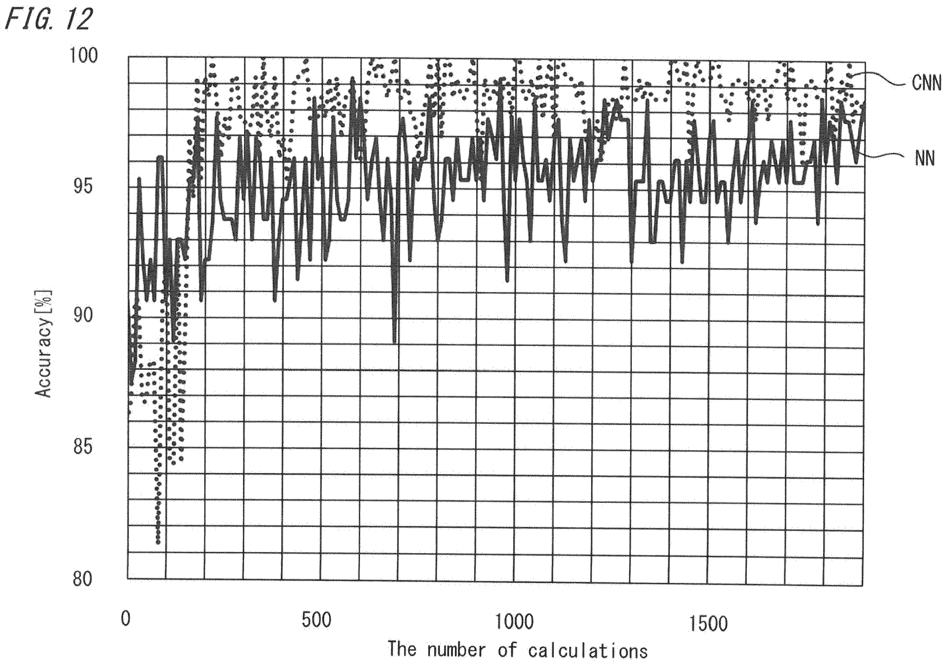

FIG. 11 is a diagram showing a configuration example of the NN in a case of providing two connection layers 13 and two complex activation layers 14. FIG. 12 shows accuracy with respect to test data in the case of using such an NN, together with accuracy in the first comparative example, i.e., the case of the CNN having two convolutional layers 2.

In this case, results of performing supervised learning when handwritten characters with the MNIST used as input data are classified into ten kinds are shown as transition of calculation accuracy with respect to the number of times of training (number of calculations).

In FIG. 12, a solid line indicates the case of using the NN according to the present embodiment, and a dotted line indicates the case of using the CNN in the first comparative example. In addition, in this case, the complex activation function f shown by the above Expression (6) is used in the NN according to the present embodiment.

As shown in FIG. 12, in the NN according to the present embodiment, when the number of calculations exceeds 1500, inference with respect to test data can be made with accuracy of about 95 %. In the CNN in the first comparative example, accuracy is about 97 %, and therefore both cases can be considered to exhibit almost equal performance.

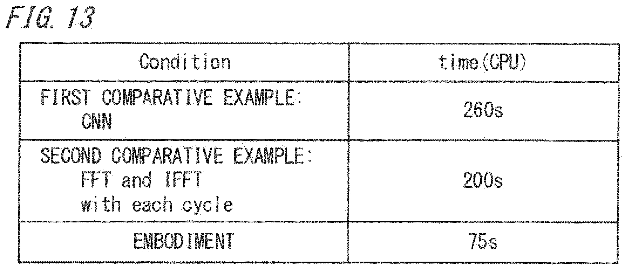

FIG. 13 shows a speed increasing effect by the NN according to the present embodiment. FIG. 13 shows difference in calculation speed among the first comparative example using the CNN having two convolutional layers 2, the second comparative example in which the complex convolution operation is performed twice and Fourier transform and inverse Fourier transform are performed before and after each complex convolution operation, and the NN according to the present embodiment. In this case, a time taken to perform actual calculations using the MNIST through CPU computation (here, calculations are performed 2000 times as shown in FIG. 12) is shown.

It is noted that the data of the MNIST is assumed to include 60 000 training data and 10 000 test data for inference.

While the MNIST is formed from comparatively small images of $32\times32$, the calculation time is 260 seconds in the first comparative example and is 200 seconds in the second comparative example, whereas in the NN according to the present embodiment, the calculation time is 75 seconds, which correspond to about 30 % of the calculation time in the first comparative example. Thus, it is found that the calculation speed is significantly increased.

In addition, by decreasing the number of training data or by using a dedicated IC for Fourier transform and inverse Fourier transform which require a calculation time, it becomes possible to perform calculation in the NN having a large number of layers even with a small processing device such as a microcomputer.

As described above, in the NN according to the present embodiment, calculation can be performed with accuracy almost equal to that of the conventional CNN In addition, the convolution operation which requires a large calculation amount is replaced with the complex convolution operation of performing matrix calculation once, whereby the calculation amount can be significantly reduced.

Further, since the complex activation function f is used, if Fourier transform and inverse Fourier transform in the hidden layers are each performed once, then, within a continuous process in the spatial frequency domain therebetween, the complex convolution operation and the complex activation function f can be used any number of times. Thus, the calculation amount required for Fourier transform and inverse Fourier transform can also be reduced. Therefore, it becomes possible to perform high-speed processing even for large images, and high recognition accuracy of the NN can be obtained with a low-cost and simple configuration of the hardware 100.

In addition, in the present embodiment, all of the calculations in the respective layers between Fourier transform and inverse Fourier transform are calculations using spatial frequency signals in the spatial frequency domain continuously. Therefore, a physical function of each calculation can be analyzed from the input signal and the output signal in each calculation. Thus, it becomes possible to perform detailed analysis of the NN, whereby the configuration of the NN can be determined from an analysis result of each layer and the NN having high performance can be established.

Application examples

According to the present embodiment, mainly for two-dimensional images, processing can be performed at high speed as compared to the CNN in the first comparative example, and in particular, in the NN having a plurality of connection layers 13 corresponding to the convolutional layer 2, a significant effect is exhibited. In image recognition, not only data acquired by a complementary metal-oxide-semiconductor (CMOS) or the like, but also an image obtained by visualizing electromagnetic waves using an infrared camera, an ultraviolet camera, a phased array antenna, or the like, can be used as input data.

In addition, using a simulator for stress, heat conduction, an electric field, a magnetic field, electromagnetic waves, piezoelectricity, acoustic waves, fluid, optics, flow, a structure, or the like, an analysis model designed by a GUI with use of a two-or-more-dimensional CAD or the like may be set as input data, an analysis result of the simulation may be set as a correct-answer label, and then learning may be performed using such data.

Further, as described above, even in a case of one-dimensional data, the data can be regarded as two-dimensional data by being converted to a spectrogram, and therefore, the method according to the present embodiment can be applied.

In addition, the NN according to the present embodiment can also be applied to an information processing device for processing input data that temporarily varies like a moving image by using convolution operation as in a convolutional long short-term memory (LSTM).

In addition, also for various recurrent neural networks (RNN), the method according to the present embodiment can be applied to a part that requires convolution operation, by performing conversion to a spectrogram.

In addition, the present embodiment can also be applied to a method of generating an image that is not included in training data or test data by using an NN called a generative adversarial network (GAN) which performs learning for two NNs of a generation network (generator) and a discrimination network (discriminator) at the same time. In the GAN, normally, the generation network and the discrimination network are formed by stacking multiple convolutional layers. Since the two NNs are trained at the same time, the number of convolutional layers increases, so that the calculation amount is enormous. However, by using the method of the present embodiment, the calculation cost can be significantly reduced.

In calculation as in the GAN, normally, learning is performed using several tens to several ten thousands of GPU boards (printed boards on which GPU computation elements are mounted), and therefore a large-scale computer is essential. However, by applying the present embodiment, speed increase by about 3 to 8 digits can be expected, though depending on the size of a generated image. Depending on the condition, learning can be performed with hardware that does not have a parallel processing mechanism such as a GPU.

In the case of the GAN, since input data may be a two-or-more-dimensional image, for example, it is also possible to input simulation data and perform desired designing.

Further, as in the known conditional GAN, it is also possible that, using a weight function that has undergone learning, a user determines a condition, to limit the output. In this case, desired designing can be performed with the GAN, and by applying the present embodiment, a time for performing learning for the designing and a time required for inference can be significantly shortened.

Further, also in reinforcement learning, various methods for performing learning using a two-dimensional image as input data are used, and many of them have a plurality of convolutional layers. In particular, in the reinforcement learning, instead of providing correct-answer labels, learning is performed while an NN called an agent repeats trial and error. Therefore, the calculation amount is enormous. Also for such reinforcement learning, the NN can efficiently perform learning by applying the present embodiment.

The same applies to unsupervised learning machines such as the stacked auto encoder (SAE) formed by a multilayered auto encoder and the deep Boltzmann machine (DBM) formed by a multilayered restricted Boltzmann machine.

The auto encoder is, for example, an NN for performing learning so that, when a two-dimensional image is inputted to the input layer, the same image is outputted. Between the input layer and the output layer, various calculation processes including convolutional layers are provided, and calculation processing is performed so that necessary information is not lost.

Also in the unsupervised learning, convolution operation is essential processing, and therefore, by applying the present embodiment, the calculation cost can be significantly reduced.

In addition, input data is not limited to two-dimensional data, and three-dimensional data may be used, e.g., combination of plan views, a bird's-eye view, a sectional view, or an image of a CAD, a 3D camera (stereo camera), or the like, may be, as three-dimensional data, directly used for input data.

Embodiment 2

In Embodiment 2, a complex activation function f different from the complex Relu function used in the above Embodiment 1 is used. In the present embodiment, the Fourier transform layer 12 performs separation into an amplitude component that is a real number not less than 0, and a phase component that is a real number that is not less than $-\pi$ and is less than $\pi$. The other configuration is the same as in Embodiment 1.

In the present Embodiment 2, as in the above Embodiment 1, in the complex activation layer 14, the second amplitude signal 22r and the second phase signal 22θ outputted from the amplitude connection layer 13A and the phase connection layer 13B are inputted, and these signals are subjected to calculation using the complex activation function f, whereby the second amplitude signal 22r is updated to be outputted as the third amplitude signal 23r, while the second phase signal 22θ is outputted as it is.

In the complex activation layer 14, in accordance with a response of the complex activation function f to the phase θ(i) at each point i in the phase matrix forming the second phase signal 22θ, the value of the amplitude r(i) at a point at the same position as the above point i in the amplitude matrix forming the second amplitude signal 22r is updated.

In the present embodiment, the complex activation function f based on the feature of a logistic function in the spatial domain is referred to as a complex logistic function, and is used.

The complex activation function f used in the above Embodiment 1 acts to update the value of the amplitude r(i) by a response that differs depending on the magnitude of the phase θ(i), whereas the complex activation function f used in the present Embodiment 2 acts to update the value of the amplitude r(i) by a constant response based on the same calculation expression irrespective of the magnitude of the phase θ(i).

An example of the complex activation function f using the complex logistic function is shown by the following Expression (21).

Mathematical 21

$$f(r,\theta) = \frac{(k^2 - 1)r}{2}\left(\frac{1}{k - \sin\frac{\theta}{2}} - \frac{1}{k+1}\right) \quad \cdots (21)$$

Here, k is a real number greater than 1. When θ takes a value that is not less than -π and is less than π, the output of the complex activation function f takes a value of 0 to 1. The amplitude r is replaced with this output.

In the above Expression (21), $((k^2 - 1)/2)$ is a constant for making the maximum value of the output of the complex activation function f be 1, and thus is not essential. Therefore, a complex activation function f shown by the following Expression (22) may be used. In this case, the maximum value of the output of the complex activation function f is $(2/(k^2 - 1))$. The minimum value of the complex activation function f is a real number not less than 0, and thus satisfies the above condition for making the amplitude component be a real number not less than 0.

Mathematical 22

$$f(r,\theta) = r \times \left(\frac{1}{k - \sin\frac{\theta}{2}} - \frac{1}{k+1}\right) \quad \cdots (22)$$

Another example of the complex activation function f using the complex logistic function is shown by the following Expression (23). This complex activation function f is a function symmetric with respect to θ = 0, and the minimum value of the output is 0 and the maximum value of the output is 1.

Mathematical 23

$$f(r,\theta) = \frac{(k^2 - 1)r}{2}\left(\frac{1}{k + \cos\theta} - \frac{1}{k+1}\right) \quad \cdots (23)$$

Still another example of the complex activation function f is shown by the following Expression (24). This complex activation function f is obtained by transforming the Gauss error function.

Mathematical 24

$$f(r,\theta) = \frac{r}{\sqrt{\pi}}\left(\int_0^\theta e^{-t^2}\,dt + 1\right) \quad \cdots (24)$$

As described above, the two-dimensional complex activation function f in the spatial frequency domain is defined on the basis of two input signals that are the amplitude r and the phase θ, whereby an activation function that cannot be expressed by an activation function in the spatial domain can be defined. Thus, the degree of freedom in expressing the activation function can be improved and learning with higher versatility can be performed.

In backpropagation for propagating loss from the output layer which is a higher layer to the input layer which is a lower layer, it is necessary to perform differentiation also for the complex activation function f used in the present embodiment. However, it is difficult to differentiate such a complex logistic function described above. In such a case, the complex logistic function can be differentiated through numerical differentiation described above.

Also in the present Embodiment 2, the same effects as in the above Embodiment 1 are obtained. That is, calculation can be performed with accuracy almost equal to that of the conventional CNN. In addition, the convolution operation which requires a large calculation amount is replaced with the complex convolution operation of performing matrix calculation once, whereby the calculation amount can be significantly reduced.

Further, since the complex activation function f is used, if Fourier transform and inverse Fourier transform in the hidden layers are each performed once, then, within a continuous process in the spatial frequency domain therebetween, the complex convolution operation and the complex activation function f can be used any number of times. Thus, the calculation amount required for Fourier transform and inverse Fourier transform can also be reduced. Therefore, it becomes possible to perform high-speed processing even for large images, and high recognition accuracy of the NN can be obtained with a low-cost and simple configuration of the hardware 100.

In addition, all of the calculations in the respective layers between Fourier transform and inverse Fourier transform are calculations using spatial frequency signals in the spatial frequency domain continuously. Therefore, a physical function of each calculation can be analyzed from the input signal and the output signal in each calculation. Thus, it becomes possible to perform detailed analysis of the NN, whereby the configuration of the NN can be determined from an analysis result of each layer and the NN having high performance can be established.

It is noted that, if the calculation speed of the complex logistic function is a speed limiting condition in the NN, it is desirable to use the complex activation function f that allows differential calculation to be performed theoretically and requires a less calculation amount, as in the complex Relu function shown in Embodiment 1.

Embodiment 3

In Embodiment 3, a complex activation function f different from those in the above Embodiments 1 and 2 is used. The other configuration is the same as in the above Embodiment 1.

Also in the present Embodiment 3, as in the above Embodiment 1, in the complex activation layer 14, the second amplitude signal 22r and the second phase signal 22θ outputted from the amplitude connection layer 13A and the phase connection layer 13B are inputted, and these signals are subjected to calculation using the complex activation function f, whereby the second amplitude signal 22r and the second phase signal 22θ are updated and outputted.

It is noted that the second amplitude signal 22r and the second phase signal 22θ are updated in the same manner by the same method, but only the second amplitude signal 22r may be updated while the second phase signal 22θ may be kept as it is.

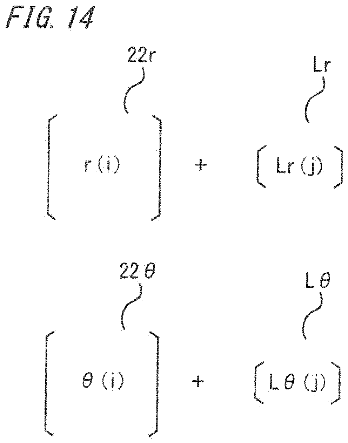

FIG. 14 illustrates operation of updating the second amplitude signal 22r and the second phase signal 22θ using the complex activation function f.

Here, for simplification, the second amplitude signal 22r and the second phase signal 22θ generated in the connection layer 13 are respectively an amplitude matrix and a phase matrix which are two-dimensional matrices.

Each axis of the amplitude matrix is a frequency axis, and each element represents the value of the amplitude. In the complex activation layer 14, a minute matrix Lr reduced such that frequency-axis components, i.e., frequency components are decreased to 1/N and an amplitude of each element is decreased to 1/M, is generated, where N and M satisfy N ≥ 2 and M ≥ 1, respectively. This minute matrix Lr is added to the original amplitude matrix. The matrix generated by the addition is an output of the complex activation function f (updated amplitude matrix).

Also for the phase matrix, similarly, a minute matrix Lθ is generated and added, and the matrix generated by the addition is an output of the complex activation function f (updated phase matrix).

The complex activation function f in this case is a nonlinear function in the spatial frequency domain.

Through calculation by the complex activation function f as described above, signal components of the inputted second amplitude signal 22r and second phase signal 22θ can be more effectively aggregated at lower-frequency components. By using the pooling layer described later after using this complex activation function f, it is possible to aggregate information at lower-frequency components while preventing deterioration of major information in the pooling layer.

It is noted that the pooling layer is provided at a stage after the complex activation layer 14 and serves as a low-pass filter in electric engineering, or more generally, a filter.

The calculation by the complex activation function f in the present Embodiment 3 requires a longer calculation time than the calculation by the complex activation function f shown in the above Embodiment 1 or 2, but enables more accurate calculation without deteriorating information.

In the calculation by the complex activation function f in the present Embodiment 3, in a case of being combined with backpropagation in learning of the NN, calculation is performed on an element-by-element basis for each matrix while calculation is reciprocally performed a plurality of times between a higher layer and a lower layer, and thus the number of calculations is enormous. Therefore, it is effective to set each of N and M to be a power of 2 and use shift operation in generating the minute matrices Lr, Lθ so as to reduce the calculation load.

In the shift operation, decimal numbers need not be used, and 2-bit calculation is performed, so that calculation is facilitated. Therefore, calculation cost is small in calculation using a von Neumann computer. For example, in a case of a compiler language such as C language, the calculation cost is about 1/10. For calculation to be a power of 1/2 such as 1/2, 1/4, or 1/8, bit calculation for right shift may be performed.

As a specific calculation example, a case of N = 2 and M = 1 will be described below.

In this case, the elements in the amplitude matrix and the phase matrix forming the second amplitude signal 22r and the second phase signal 22θ are decimated one by one. As a result, the sizes of the row and the column of each matrix become 1/2, thus becoming the minute matrices Lr, Lθ. For the minute matrices Lr, Lθ with reduced sizes, zero padding is performed at high-frequency components, thus processing them to have the same sizes as the amplitude matrix and the phase matrix before decimation. The processed minute matrices Lr, Lθ are added to the amplitude matrix and the phase matrix before decimation, whereby output signals of the complex activation function f in the simplest form can be generated.

It is noted that a plural number of each of the minute matrices Lr, Lθ may be used and the minute matrices Lr, Lθ corresponding to 1/4, 1/8, or the like as well as 1/2 may be further added.

In the present embodiment, since discrete signals are used, fractional numbers are generated in a case other than M = 1. In such a case, a method of rounding fractional numbers or a method of estimating values through interpolation is used.

Also in the present Embodiment 3, as in the above Embodiment 1, the convolution operation which requires a large calculation amount is replaced with the complex convolution operation of performing matrix calculation once, whereby the calculation amount can be significantly reduced.

Further, since the complex activation function f is used, if Fourier transform and inverse Fourier transform in the hidden layers are each performed once, then, within a continuous process in the spatial frequency domain therebetween, the complex convolution operation and the complex activation function f can be used any number of times. Thus, the calculation amount required for Fourier transform and inverse Fourier transform can also be reduced. Therefore, it becomes possible to perform high-speed processing even for large images, and high recognition accuracy of the NN can be obtained with a low-cost and simple configuration of the hardware 100.

In addition, all of the calculations in the respective layers between Fourier transform and inverse Fourier transform are calculations using spatial frequency signals in the spatial frequency domain continuously. Therefore, a physical function of each calculation can be analyzed from the input signal and the output signal in each calculation. Thus, it becomes possible to perform detailed analysis of the NN, whereby the configuration of the NN can be determined from an analysis result of each layer and the NN having high performance can be established.

Embodiment 4

In Embodiment 4, a complex activation function f different from those in the above Embodiments 1 to 3 is used. The other configuration is the same as in the above Embodiment 1.

Also in the present Embodiment 4, as in the above Embodiment 1, in the complex activation layer 14, the second amplitude signal 22r and the second phase signal 22θ outputted from the amplitude connection layer 13A and the phase connection layer 13B are inputted, and these signals are subjected to calculation using the complex activation function f, whereby the second amplitude signal 22r and the second phase signal 22θ are updated and outputted.

It is noted that the second amplitude signal 22r and the second phase signal 22θ are updated in the same manner by the same method, but only the second amplitude signal 22r may be updated while the second phase signal 22θ may be kept as it is.

Here, in Fourier transform, using g and h as given functions, the following equation is satisfied:

$$F[g \odot h] = F[g] * F[h],$$

where F represents Fourier transform, * represents convolution operation, and ⊙ represents Hadamard product.

This means that the Hadamard product in the spatial domain corresponds to convolution in the spatial frequency domain. At this time, with F[g] considered to be an input signal and F[h] considered to be a kernel, performing the convolution operation on the input signal F[g] using F[h] as a kernel is adopted as calculation in the complex activation function f.

However, if a given kernel F[h] is applied to F[g] in the spatial frequency domain, information included in the input signal F[g] is deteriorated. That is, information of frequencies for great amplitudes, which are dominant frequency components composing g, is lost. Therefore, such a function that the amplitude (absolute value) is maximized at the origin of the kernel F[h] is selected, thereby preventing deterioration of the information.

An example of such a function is a sinc function. The sinc function is represented as (sin(x)/x), using x as a frequency, and has a maximum value at x = 0.

As described above, the complex activation function f acts to perform the convolution operation on an input signal (target signal) using, as the kernel F[h], such a function that the absolute value of a value at the origin as a reference is maximized. Thus, the complex activation function f having accuracy equal to that of the activation function in the spatial domain is obtained.

Using this F[h], the convolution operation is performed on the second amplitude signal 22r. Also for the second phase signal 22θ, the convolution operation may be performed in the same manner.

It is desirable to have both of positive and negative values, as well as maximizing the amplitude at the origin of the kernel F[h]. That is, it is desirable to use such a function as to cross an axis at the amplitude = 0 of the kernel F[h]. Thus, regarding an amplitude of a result (F[g]*F[h]) after the convolution operation, a point where the amplitude is 0 arises, and the point where the amplitude is 0 becomes information in the NN

Further, since the output of the second amplitude signal 22r needs to be a positive real number, it is desirable that the output (F[g]*F[h]) after the convolution operation is converted to an absolute value.

Besides the sine function described above, a spatial-frequency-domain expression of the Relu function can also be used. However, since Relu(x) which is a general Relu function increases in proportion to x, the value of Fourier transform diverges. Therefore, where the axial-direction size (number of pixels) of an image is denoted by x0, F[h] can be represented by the following Expression (25).

Mathematical 25

$$F[h](x) = \frac{1}{2}\left\{ \frac{1}{\frac{2\pi}{x_0} - x} + \frac{1}{\frac{2\pi}{x_0} + x} - \frac{e^{j\left(\frac{2\pi}{x_0} - x\right)\frac{x_0}{2}}}{\frac{2\pi}{x_0} - x} - \frac{e^{-j\left(\frac{2\pi}{x_0} + x\right)\frac{x_0}{2}}}{\frac{2\pi}{x_0} + x} \right\}$$

$$\cdots (25)$$

In this case, the calculation amount when calculation of backpropagation is performed is enormous.

Alternatively, a sigmoid function represented by the following Expression (26) is a function that converges in the spatial frequency domain.

Mathematical 26

$$\sigma(x) = \frac{1}{1 + e^{-x}} \qquad \cdots (26)$$

Therefore, F[h] may be a function calculated as F[h](x) = -jπ·csch(πx).

In addition, csch(πx) may be replaced with a function represented as cosech(x). However, this function diverges at x = 0 and therefore is rounded to be a finite value in actual calculation.

Also in the present Embodiment 4, since the complex activation function f is used, if Fourier transform and inverse Fourier transform in the hidden layers are each performed once, all of the calculations in the respective layers between Fourier transform and inverse Fourier transform are calculations using spatial frequency signals in the spatial frequency domain continuously. Therefore, a physical function of each calculation can be analyzed from the input signal and the output signal in each calculation. Thus, it becomes possible to perform detailed analysis of the NN, whereby the configuration of the NN can be determined from an analysis result of each layer and the NN having high performance can be established.

In the present Embodiment 4, the complex activation function f acts to perform the convolution operation using a kernel in the spatial frequency domain. Therefore, it is possible to perform calculation theoretically equal to that in the CNN of the first comparative example and obtain equal accuracy, but the calculation speed is not improved.

However, the complex activation function f in the present Embodiment 4 corresponds to performing the method of the CNN with calculations using spatial frequency signals in the spatial frequency domain continuously, and thus it becomes possible to perform detailed analysis on the CNN which is the conventional method.

For example, the convolution operation (in the spatial frequency domain, Hadamard product) serves to emphasize an edge (boundary between objects). The activation function (in the spatial frequency domain, complex activation function) is a nonlinear function and serves for generation of frequency components different from the input signal (generation in both of a low-frequency band and a high-frequency band). Pooling (in the spatial frequency domain, complex pooling) described later serves as a filter typified by a low-pass filter. In this way, respective calculations can be analyzed while being clearly separated from each other, and thus it is possible to contribute to development of the NN including the CNN

Analysis on the calculation in the respective layers of the NN will be described in more detail.

In the convolution operation in the spatial domain, where the horizontal axis and the vertical axis of the input image are respectively defined as x axis and y axis, if the kernel is, for example, a two-dimensional signal obtained through differentiation in the x-axis direction of a Gaussian, the input image is convolved with this kernel, whereby an image in which an edge of a y-axis-direction component is emphasized can be outputted. Similarly, by convolving the input image with a kernel obtained by differentiating the Gaussian in a given direction, it is possible to extract an image edge in any direction of the input image.

In the CNN, edges in various directions are extracted using a plurality of kernels obtained through training, and these edges are synthesized for analyzing the input image. In the spatial domain, features of the image are extracted through such convolution processing including a plurality of calculations. Then, processing having the same physical meaning as the above can be performed, in the spatial frequency domain, by the complex convolution operation not using the convolution operation using a kernel.

Next, analysis on the activation function (in the spatial frequency domain, complex activation function) will be described.

Conventionally, it has been found that, in spatial-domain processing, a structure resembling firing of a neuron of a brain can be expressed by a nonlinear function, through studies of the neocognitron or the CNN.

However, in the present embodiment, analysis on the activation function, when combined with analysis on the function of pooling (in the spatial frequency domain, complex pooling) described later, can derive such a conclusion that the most important role among the roles of the activation function in deep learning is to generate frequency components different from the input signal.

For example, the Relu function in the spatial domain can correspond to, in the spatial frequency domain, performing processing of half-wave rectification in the spatial frequency domain. That is, half-wave rectification processing on a triangular wave (general image) having two or more different frequencies results in transferring a part of energy to low-frequency components close to a DC component, as well as the frequency components included in the original triangular wave. Therefore, it is found that, approximately, as shown in Embodiment 3, the same effect is obtained even through calculation of causing a part of a signal to be outputted to a low-frequency component side.

Here, the calculation in the spatial frequency domain does not become the same result as the calculation in the spatial domain, but the difference in calculation result can be adjusted through training in the complex convolution operation.

Embodiment 5

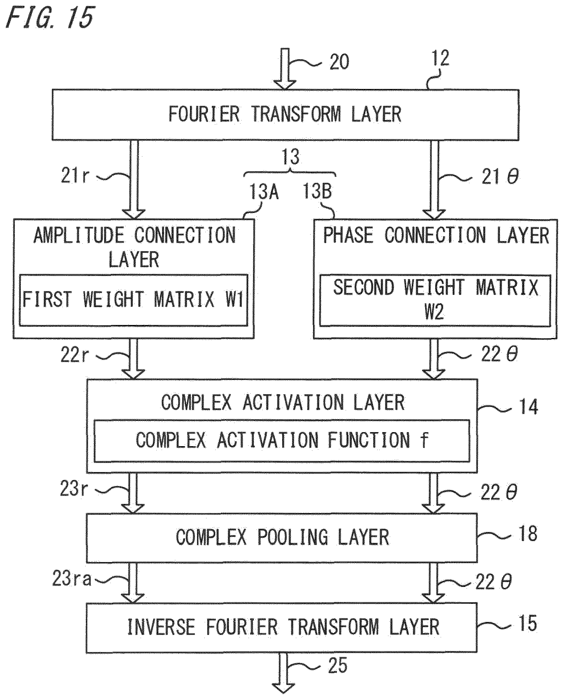

In Embodiment 5, a complex pooling layer is provided to the NN according to the above Embodiments 1 to 4. A complex pooling layer 18 is a layer in the spatial frequency domain, corresponding to the pooling layer 4 in the spatial domain. FIG. 15 is a diagram showing the configuration of the NN according to the present Embodiment 5, and shows the details of a part corresponding to FIG. 4 shown in the above Embodiment 1.

As in the above Embodiment 1, the amplitude connection layer 13A has the first weight matrix W1 and multiplies the first amplitude signal 21r by the first weight matrix W1, to output the second amplitude signal 22r. The phase connection layer 13B multiplies the first phase signal 21θ by the second weight matrix W2, to output the second phase signal 22θ.

In the complex activation layer 14, of the second amplitude signal 22r and the second phase signal 22θ, only the second amplitude signal 22r is updated using the complex activation function f, to be outputted as the third amplitude signal 23r, while the second phase signal 22θ is outputted without being updated.

The complex pooling layer 18 is provided directly after the complex activation layer 14, and performs calculation processing on the signals updated through the complex activation layer 14. In this case, since only the amplitude component is updated, the inputted third amplitude signal 23r is subjected to calculation processing, thus outputting an amplitude signal 23ra.

In a case where the complex pooling layer 18 is provided in the above Embodiment 3 or 4 and the complex activation layer 14 updates both of the second amplitude signal 22r and the second phase signal 22θ, the complex pooling layer 18 performs calculation processing on both of the updated signals.

The calculation in the pooling layer 4 in the spatial domain is referred to as pooling, and the calculation in the complex pooling layer 18 in the spatial frequency domain is referred to as complex pooling.

The pooling in the spatial domain lowers sensitivity for the position of a feature extracted in the convolutional layer 2, and thus, even if the position of a targeted feature in the image is changed, the image can be recognized as the one having the same feature. This means "blurring" of the image.

In a case of applying "blurring" in the spatial frequency domain, this can be easily achieved by removing high-frequency components. A high-frequency component is a component that arises when there is sharp change between elements at adjacent pixels. Therefore, complex pooling can be obtained by removing high-frequency components in the spatial frequency domain.

The calculation in the complex pooling layer 18, i.e., the complex pooling, corresponds to a low-pass filter in the field of signal processing. Then, performing the complex pooling results in a structure robust against positional displacement and rotation of the input image, and also, prevents overtraining of the NN and improves calculation accuracy.

In general, in the pooling in the spatial domain, a map is cut for each image size of S×T (S and T are integers not less than 2), and max pooling for outputting the maximum value in each cut area or average pooling for outputting the average value in each cut area is generally used. Besides, Lp pooling and the like are known. Difference among these types of pooling can be considered to indicate difference among the shapes of low-pass filters in the spatial frequency domain.

In the spatial frequency domain, matrices of an amplitude signal and a phase signal for which frequency shift has been performed so that low-frequency components arise at a center part of the matrix and high-frequency components arise at a peripheral part of the matrix, are considered. It is desirable that a function used for the complex pooling on these matrices is a two-dimensional Gaussian. In a case of using a Gaussian, the filter shape is not changed through Fourier transform. Therefore, it becomes unnecessary to perform filter operation for suppressing occurrence of high-frequency components which would occur in Fourier transform.

Besides, a window function obtained by transforming a window function such as Hann window, Hamming window, Hanning window, Blackman window, or Kaiser window in accordance with the dimension of the input signal in each hidden layer, may be used for the complex pooling. It is noted that, in a case of performing calculation on the amplitude signal using such a complex pooling function as to generate a negative component as in a flat top window, a calculation result is converted to the absolute value so that a negative component is not generated. With such a window function, discontinuity in performing Fourier transform and inverse Fourier transform can also be removed, and therefore noise components generated due to numerical processing can also be removed.

Further, by using a high-pass filter for removing information offset by low-frequency components close to DC, i.e., monochrome, it is possible to remove monochrome information such as a background component. Specifically, from the signal that has undergone frequency shift, a signal corresponding to several pixels at a center part is removed. In this case, generally, a high-pass filter for suppressing center-part pixels of 10 % or less is provided. It is noted that this method cannot be used for data whose DC component is an important factor.

In actual designing of the NN, it is desirable to use a band-pass filter by combining the high-pass filter and the low-pass filter.

As an example of such a band-pass filter, a Gabor filter which is a function represented by a product of a trigonometric function and a Gaussian function shown by David Hubel and Torsten Wiesel, may be used. Alternatively, any band-pass filter may be used by combining a low-pass filter and a high-pass filter.

Here, the complex activation function f shown in the above Embodiment 3 or 4, or the activation function used in the CNN, serves to generate frequency components lower than a specific frequency, in the NN

For example, in a case where the amplitude becomes negative in the CNN, the output of the activation function (Relu function) becomes zero. The fact that the output is zero means that, in the spatial frequency domain, the frequency is zero, i.e., a DC component, and means half-wave rectification in electric engineering. In addition, in a case of a specific frequency, half-wave rectification results in continuous change of the frequency from a DC component to the specific frequency. Therefore, even if the input signal to the activation function has a single frequency, the output signal has frequency components over a wide band.

In the present Embodiment 5, the complex pooling layer 18 is provided after calculation of the complex activation function f, whereby major information at low-frequency components can be effectively aggregated.

As used herein, aggregation of information means that high-frequency components are removed by a low-pass filter (e.g., Gaussian filter).

In the NN having multiple hidden layers, it is also desirable to provide the complex pooling layer 18 not only at a stage directly after the complex activation layer 14 but also at a stage before the complex activation layer 14.

Applying the above Embodiment 4 enables analysis also on pooling (in the spatial frequency domain, complex pooling). This will be described below.

As described above, pooling in the spatial domain is roughly classified into max pooling and average pooling.

For example, an image is cut with bits of $2\times2$, and the maximum value or the average value in the bits of $2\times2$ is outputted. This calculation exhibits a blurring effect. In addition, the blurring can provide an effect that, even if the position of the input image is displaced or the input image is rotated, the image can be recognized as the same image.

On the other hand, according to analysis on the complex pooling in the spatial frequency domain under application of the above Embodiment 4, it is found that the calculation of pooling corresponds to a low-pass filter. In addition, it is found that the max pooling and the average pooling merely make difference in sharpness of an edge at a cut-off frequency of the filter.

Therefore, while the pooling in the spatial domain has a vague meaning in a physical sense, it is possible to, in the spatial frequency domain, cause the complex pooling to act as an explicit filter. Thus, the complex pooling enables establishment of a deep learning model having higher accuracy in inference than in the case of a filter in the spatial domain. Further, since it is possible to adopt any filter such as a band-pass filter that removes only a DC component and a high-frequency component besides a low-pass filter, the deep learning model can be established with a high degree of freedom.

The fact that the complex pooling corresponds to a low-pass filter is greatly related with the activation function (in the spatial frequency domain, complex activation function). As described above, the activation function serves to generate low-frequency components. Applying a low-pass filter thereto can make such a configuration as to remove high-frequency components of the original input signal while keeping the low-frequency components generated by the activation function. However, this depends on the cut-off frequency of the low-pass filter, i.e., designing of the low-pass filter.

To summarize the contents of analysis on the CNN in the case of applying the above Embodiment 4 to the present Embodiment 5, the following conclusion is obtained. The CNN is a method in which convolution is performed with a filter obtained through training, to extract an edge of an image, a signal with low-frequency components is generated by a nonlinear function as an activation function, and then, by pooling, frequency components arising as low-frequency components are kept and the other components are removed, thus performing learning.

Embodiment 6

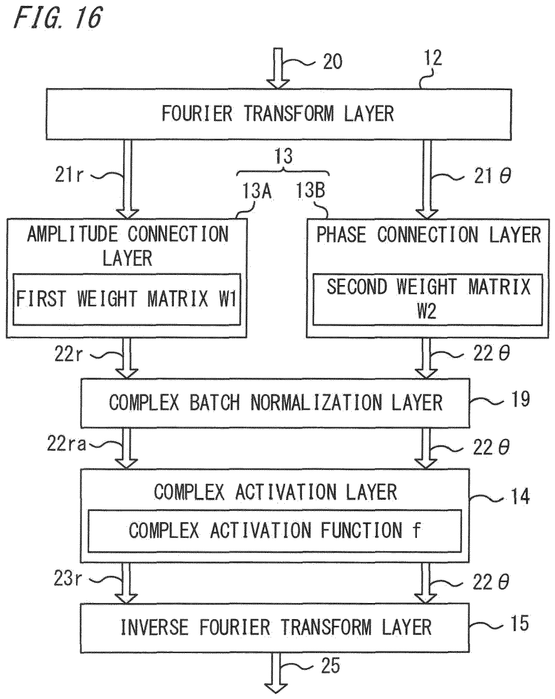

In Embodiment 6, a complex batch normalization layer is provided to the NN according to the above Embodiments 1 to 5. FIG. 16 is a diagram showing the configuration of the NN according to the present Embodiment 6, and shows the details of a part corresponding to FIG. 4 shown in the above Embodiment 1.

In this case, an example in which a complex batch normalization layer 19 is provided between the connection layer 13 and the complex activation layer 14, is shown. Alternatively, the complex batch normalization layer 19 may be provided at a stage after the complex activation layer 14 or a stage before the connection layer 13.

A phenomenon in which the distribution (average value and standard deviation) of data used for learning differs between training and inference, i.e., shift occurs therebetween, is referred to as covariate shift. In the NN, the covariate shift between the hidden layers during training is referred to as internal covariate shift, and shift by the internal covariate shift propagates. As the number of the hidden layers in the NN increases, the shift further propagates and learning for weighting in higher layers close to the output layer takes a longer time. Then, in some cases, learning ends up no longer progressing.

Therefore, in the spatial domain, a method called batch normalization may be used for shortening the time taken for training. The batch normalization in the spatial domain is to take the average and the standard deviation of an input (normally, matrix) to one hidden layer, subtract the average value from the input, and divide the resultant value by the standard deviation.

The complex batch normalization layer 19 according to the present Embodiment 6 is a hidden layer for performing complex batch normalization in the spatial frequency domain corresponding to the batch normalization in the spatial domain.

By the complex batch normalization, also in the spatial frequency domain, the same calculation as in the batch normalization in the spatial domain is performed for only the amplitude signal, whereby the influence of the internal covariate shift can be reduced and the time taken for training can be reduced.

In this case, the complex batch normalization layer 19 is provided between the connection layer 13 and the complex activation layer 14. Therefore, the complex batch normalization layer 19 performs the complex batch normalization for only the second amplitude signal 22r outputted from the amplitude connection layer 13A, to output the amplitude signal 22ra.

Disadvantage to calculation accuracy due to provision of the complex batch normalization layer 19 is small. Therefore, the complex batch normalization layer 19 may be provided before or after the complex pooling layer 18, or before or after a hidden layer such as an log amplitude layer or a log axis layer described later.

In a case where learning time increases due to the influence of the calculation time in the complex batch normalization layer 19 itself, it is desirable to decrease the number of the complex batch normalization layers 19 and take the following measures. That is, this may be coped with by such a method of changing the complex activation function f, performing learning for the initial value of the weight matrix W in advance, reducing the learning coefficient in gradient descent, or constraining the degree of freedom of the NN by a dropout layer, a sparsely connected layer, or the like.

Embodiment 7

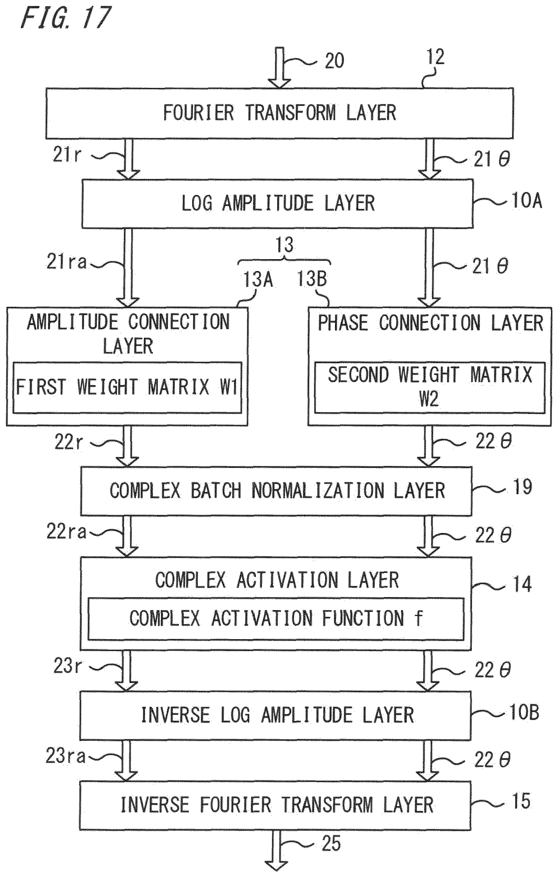

In Embodiment 7, a log amplitude layer and an inverse log amplitude layer are provided to the NN according to the above Embodiments 1 to 6. FIG. 17 is a diagram showing the configuration of the NN according to the present Embodiment 7 and shows the details of a part of the NN corresponding to FIG. 16 in a case of applying the log amplitude layer and the inverse log amplitude layer to the above Embodiment 6.

As shown in FIG. 17, a log amplitude layer 10A is provided between the Fourier transform layer 12 and the connection layer 13, and an inverse log amplitude layer 10B is provided at a stage before the inverse Fourier transform layer 15.

When the input signal 20 is subjected to Fourier transform in the Fourier transform layer 12 and thus is divided into the first amplitude signal 21r and the first phase signal 21θ, a signal having a great amplitude at an amplitude signal having a certain frequency on the frequency axis may occur in the first amplitude signal 21r. In this case, due to the signal having a great amplitude, the other components of the matrix forming the amplitude signal become almost zero and thus features of the image are lost, so that only a part exhibiting a great amplitude is learned.

In the present Embodiment 7, the log amplitude layer 10A calculates logarithms of amplitudes of the first amplitude signal 21r (amplitude matrix), i.e., generates and outputs an amplitude signal 21ra in which the amplitudes have been transformed to logarithms. Thus, the adverse effects due to the signal having a great amplitude, which is caused after Fourier transform, are suppressed, whereby reliability of learning can be enhanced.

Where the input signal is denoted by x and the base is denoted by a, an output signal y calculated by transforming the amplitude to a logarithm is represented as follows:

$$y = \log_a x.$$

Here, as the base a, the natural logarithm base e, 2, or 10 is generally used, but another real number may be used.

In a normal image, the magnitude of the input signal may differ by about 2 to 3 digits. However, for example, in a case of using a base 10, even if there is difference by 3 digits, the difference results in 3-fold change, so that learning can be performed sensitively for a signal having a small amplitude and less sensitively for a signal having a great amplitude.

The amplitude signal 21ra may be generated such that the signal transformed to a logarithm is multiplied by a constant b which is a real number greater than 0 and an error component δ is used for preventing the input signal from becoming 0, as shown by the following calculation expression:

$$y = b \cdot \log_a(x + \delta).$$

In a case where any element in the amplitude matrix does not have a value of 0, the error component δ need not be inputted, and in a case where any element in the amplitude matrix has a value of 0, it is desirable to input the error component δ that is smaller by one or more digits than the minimum value except 0.

The constant b is used for the purpose of preventing the output value y from becoming smaller than a rounding error of the information processing device or becoming excessive. In many cases, the constant b is set to 10 or 20, but may be another real number.

In the inverse log amplitude layer 10B provided at a stage before the inverse Fourier transform layer 15, the amplitude (logarithm amplitude) of the inputted amplitude signal (third amplitude signal 23r) is returned to an antilogarithm to generate and output an amplitude signal 23ra. Where the input signal is denoted by x and the output signal is denoted by y, this calculation is represented by the following Expression (27) or Expression (28).

Mathematical 27

$$y = a^x \qquad \cdots (27)$$

Mathematical 28

$$y = a^{x/b} - \delta \qquad \cdots (28)$$

Embodiment 8

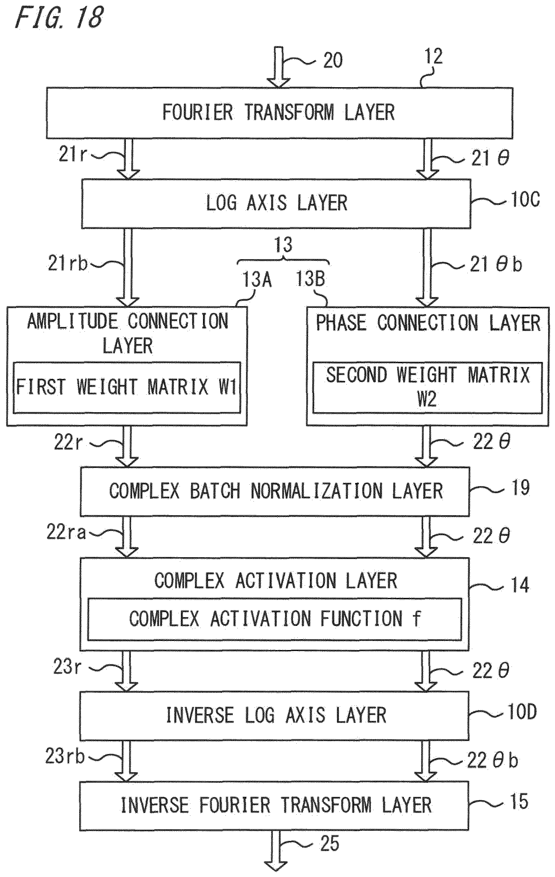

In Embodiment 8, a log axis layer and an inverse log axis layer are provided to the NN according to the above Embodiments 1 to 7. FIG. 18 is a diagram showing the configuration of the NN according to the present Embodiment 8 and shows the details of a part of the NN corresponding to FIG. 16 in a case of applying the log axis layer and the inverse log axis layer to the above Embodiment 6.

As shown in FIG. 18, a log axis layer 10C is provided between the Fourier transform layer 12 and the connection layer 13, and an inverse log axis layer 10D is provided at a stage before the inverse Fourier transform layer 15.

The log axis layer 10C will be described below.

Also in the present embodiment, for simplification, the input data used for learning is assumed to be two-dimensional data. One axis of the two-dimensional data is referred to as X axis and the other axis is referred to as Y axis.

The X axis and the Y axis of the first amplitude signal 21r and the first phase signal 21θ after Fourier transform in the Fourier transform layer 12 represent actual values (antilogarithms) as in the input data. The first amplitude signal 21r and the first phase signal 21θ are inputted to the log axis layer 10C. The log axis layer 10C applies a logarithm to each of the X axis and the Y axis of the first amplitude signal 21r and the first phase signal 21θ, i.e., generates and outputs an amplitude signal 21rb and a phase signal 21θb that have undergone axis logarithm transform.

It is noted that the base can be set to any real number not less than 0.

Thus, the amplitude signal 21rb and the phase signal 21θb can become two-dimensional data with low-frequency components emphasized, for each of the X axis and the Y axis. This can be considered to be expansion of the dynamic range, and thus learning can be performed without missing even slight change in a low-frequency component. It is noted that such a method cannot be used in the conventional CNN

In the present embodiment, information about low-frequency components having a large information amount can be emphasized, and information about high-frequency components having a less information amount can be suppressed, whereby highly reliable learning can be efficiently performed.

In the inverse log axis layer 10D provided at a stage before the inverse Fourier transform layer 15, the X axis and the Y axis of the inputted amplitude signal (third amplitude signal 23r) and the inputted phase signal (second phase signal 22θ) are returned to antilogarithms, to generate and output an amplitude signal 23rb and a phase signal 22θb. However, the inverse axis logarithm transform for returning the X axis and the Y axis to antilogarithms is not always needed, as long as inverse Fourier transform can be performed in the inverse Fourier transform layer 15 at the subsequent stage.

The amplitude signal 21rb and the phase signal 21θb that have undergone the axis logarithm transform can result in an image in which the sampling interval on the low-frequency side is wide. In such a case, interpolation is performed. As the interpolation, a known method such as linear interpolation, polynomial interpolation, or spline interpolation is used.

Further, in a case where the X axis and the Y axis indicate different physical quantities as in a spectrogram, only one of the axes may be subjected to axis logarithm transform. In addition, even in a case of the same physical quantity, if the learning standpoint differs between the X axis and the Y axis, similarly, only one of the axes may be subjected to axis logarithm transform.

In a case of applying the present Embodiment 8 to the above Embodiment 7, if the amplitude is regarded as Z axis, all of the X axis, the Y axis, and the Z axis are subjected to logarithm transform, i.e., full logarithm transform. Thus, the log amplitude layer 10A and the inverse log amplitude layer 10B in the above Embodiment 7 may be combined with the log axis layer 10C and the inverse log axis layer 10D in the present Embodiment 8, to form a full log layer and an inverse full log layer which respectively perform full logarithm transform and inverse full logarithm transform. Through the full log layer, the row, the column, and the elements of the matrix of the amplitude signal (first amplitude signal 21r) become logarithms, and the row and the column of the matrix of the phase signal (first phase signal 21θ) become logarithms.

Embodiment 9

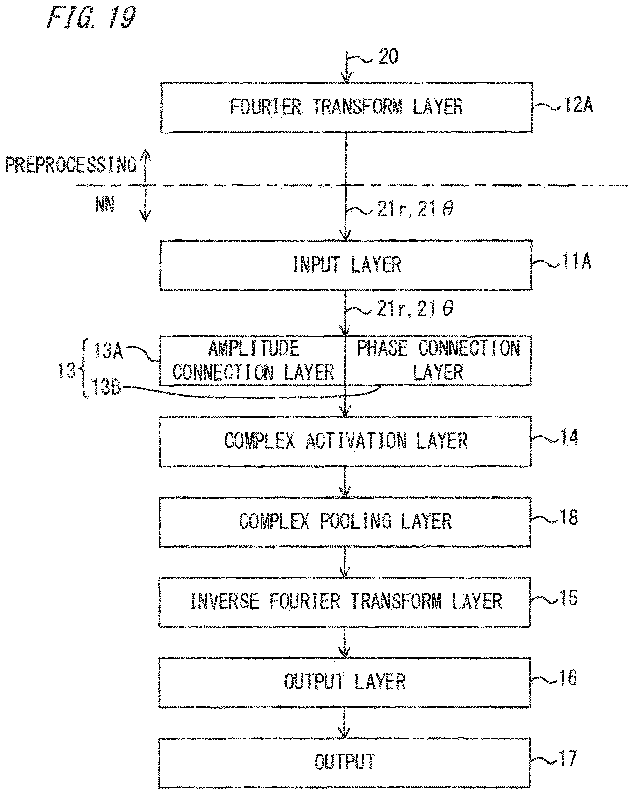

FIG. 19 is a diagram showing the configuration of the NN according to the present Embodiment 9.

As shown in FIG. 19, the NN has, sequentially from an input layer 11A, the connection layer 13 which is composed of the amplitude connection layer 13A and the phase connection layer 13B and performs the complex convolution operation, the complex activation layer 14 for performing calculation using the complex activation function f, the complex pooling layer 18, the inverse Fourier transform layer 15, the output layer 16, and the output 17.

Further, a Fourier transform layer 12A which is a calculation unit for performing Fourier transform as preprocessing for the NN is provided separately from the NN. The Fourier transform layer 12A performs Fourier transform on the inputted input signal 20 in the spatial domain, and outputs the first amplitude signal 21r and the first phase signal 21θ which are signals in the spatial frequency domain.

In the present Embodiment 9, the input layer 11A of the NN passes, as input signals, the first amplitude signal 21r and the first phase signal 21θ which are signals in the spatial frequency domain, to the connection layer 13 which is the higher layer.

Therefore, it is not necessary to perform Fourier transform in the NN, so that, in learning, it becomes unnecessary to repeat calculation in the Fourier transform layer and also the corresponding calculation thereof in backpropagation is not needed. Thus, the calculation time can be shortened.

In this case, the example in which the complex pooling layer 18 is provided is shown. However, the present embodiment may be applied to any of the NNs according to the above Embodiments 1 to 8 so that the Fourier transform layer 12A is provided separately from the NN, whereby Fourier transform can be performed as preprocessing for the NN

Embodiment 10

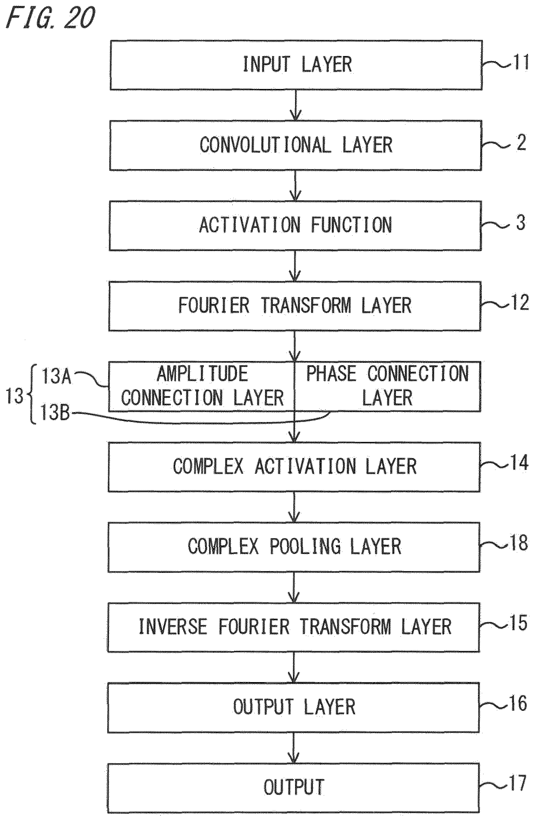

FIG. 20 is a diagram showing the configuration of the NN according to the present Embodiment 10.

As shown in FIG. 20, the NN has, sequentially from the input layer 11, the convolutional layer 2 for performing the convolution operation, the activation function 3, the Fourier transform layer 12, the connection layer 13 which is composed of the amplitude connection layer 13A and the phase connection layer 13B and performs the complex convolution operation, the complex activation layer 14 for performing calculation using the complex activation function f, the complex pooling layer 18, the inverse Fourier transform layer 15, the output layer 16, and the output 17. In this case, an example in which the convolutional layer 2 and the activation function 3 are interposed at stages after the input layer 11 of the NN according to the above Embodiment 5, is shown.

The input signal 20 which is a spatial signal is subjected to, in the spatial domain, the convolution operation using a kernel in the convolutional layer 2 and then calculation using the activation function 3. The spatial signal after the calculation by the activation function 3 is divided into the first amplitude signal 21r and the first phase signal 21θ in the Fourier transform layer 12. The subsequent calculations are the same as in the above Embodiment 5.

In the present embodiment, the convolutional layer 2 and the activation function 3 which are hidden layers in the spatial domain are provided at stages before the Fourier transform layer 12. Therefore, the NN having the spatial domain and the spatial frequency domain combined is formed.

For example, in a case where the input signal 20 is formed by combination of R, G, B, a method of separating the input data on a color basis in the input layer is used in the CNN. In a case of a color image, normally, there is information in the vertical and horizontal directions and in addition, there is a channel direction which is the color dimension of RGB, thus forming a three-dimensional shape. This three-dimensional shape contains spatial information that, for example, pixels spatially close to each other often have similar values. In addition, the three-dimensional shape may contain essential information about the image, such as a fact that there is a close relationship among the channels of R, G, B or pixels far from each other are less related with each other, for example.

The convolutional layer 2 can extract and keep such information.

In the present embodiment, particular methods in the spatial frequency domain, such as the complex convolution operation, the complex activation function f, and the complex pooling, can be used, and thus it becomes possible to perform calculation that could not be performed in the spatial domain.

In particular, in the spatial domain, it is difficult to investigate a local change amount and an overall change amount of an image, but in the present embodiment, it is possible to perform learning and inference while keeping such information. Regarding the physical positional relationship of features to be lost through Fourier transform, it becomes possible to keep such information by providing the convolutional layer 2 and the activation function 3 near the input layer 11. Thus, learning and inference can be performed with high accuracy.

In the above example, only one convolutional layer 2 and one activation function 3 are provided, but normally, the NN is configured in a multilayered manner, and a CNN having a small number of layers such as one to five convolutional layers 2 is interposed between the input layer 11 and the Fourier transform layer 12, thus forming the entire NN. Then, training is performed between the Fourier transform layer 12 and the output layer 16 in the same manner as in the above Embodiment 1.

Thus, it is possible to increase the speed also for multi-dimensional input data having three or more dimensions.

As compared to the first comparative example having only the CNN in the spatial domain, the calculation load is reduced, so that the image amount that can be processed in one learning can be increased. Therefore, under the condition of the same calculation amount, higher accuracy can be expected as compared to the case of using the first comparative example.

In the above Embodiment 10, the example in which the convolutional layer 2 and the activation function 3 which are hidden layers in the spatial domain are provided at a stage before the Fourier transform layer 12, has been shown. However, the convolutional layer 2 and the activation function 3 may be provided between the inverse Fourier transform layer 15 and the output layer 16, or may be provided at both of a stage before the Fourier transform layer 12 and a stage after the inverse Fourier transform layer 15.

Embodiment 11

In the present Embodiment 11, an electronic apparatus for performing control operation using the NN of the information processing device shown in each of the above Embodiments 1 to 10, will be described.

The information processing device according to the present invention is used for processing information of a sensor mounted on an air conditioner, processing information of a sensor of a servo system or the like used for factory automation in a factory, or processing information of a sensor attached inside a vehicle or at an outdoor part, for example. Conventionally, in such processing, for using a CNN, it is necessary to prepare a GPU, an application specific integrated circuit (ASIC), or an FPGA dedicated for neural network processing. On the other hand, in the present embodiment, information of a sensor provided to an air conditioner, a servo system, or a vehicle can be processed by general hardware including an existing CPU microcomputer and a memory.

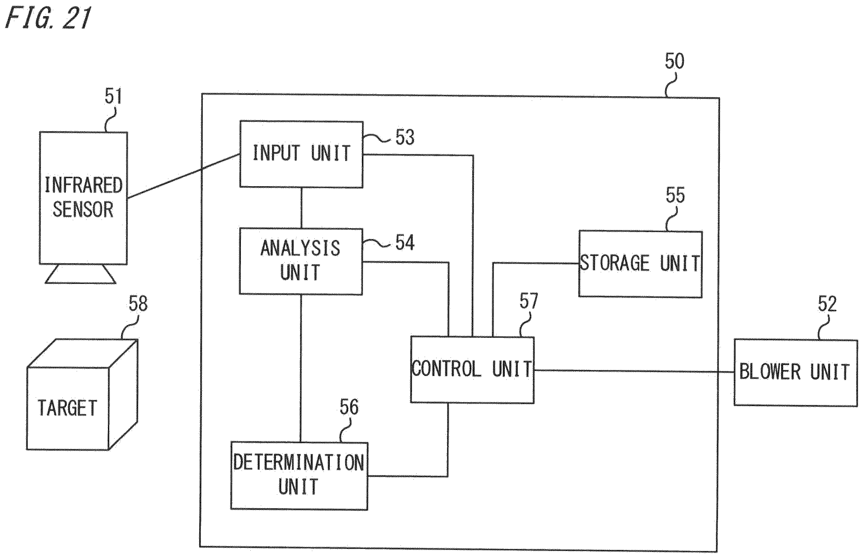

FIG. 21 is a diagram showing a configuration example of an air conditioner as the electronic apparatus according to the present Embodiment 11. The air conditioner includes an information processing device 50 according to the present invention, an infrared sensor 51 for recognizing a target 58, and a blower unit 52. The information processing device 50 includes an input unit 53 for receiving data, an analysis unit 54 for analyzing data inputted from the input unit 53, a storage unit 55 for storing a result of analysis, a determination unit 56 for determining the analysis result as the target 58, and a control unit 57 for controlling each unit.

The information processing device 50 controls at least the wind direction, the air volume, and the temperature of the blower unit 52, using the control unit 57.

In this case, the analysis unit 54, the determination unit 56, and the control unit 57 as a whole have a function of the CPU 30 of the hardware 100 shown in FIG. 1, and the storage unit 55 has functions of the ROM 31 and the RAM 32 of the hardware 100.

Then, the information processing device 50 has a learning process in which an output signal from the infrared sensor 51 is used as an input signal and the position and temperature change of a living body are learned on the basis of the input signal, and an inference process for performing inference on the basis of the input signal using the information obtained through the learning process, and performs control operation on the basis of the inference process.

Hereinafter, operation of the information processing device 50 using the NN will be described.

The information processing device 50 has a process for the NN to infer the position of the living body and temperature change of the living body on the basis of the input signal from the infrared sensor 51. The position of the living body is inferred through detection of the temperature of the living body using the information processing device 50. In addition, a process for predicting the temperature suitable for each living body from temperature change of the living body is performed by the information processing device 50.

For usage of an air conditioner, the following method may be used: learning of the NN is performed in advance and the weight matrices W obtained through the learning of the NN are stored in the storage unit 55; or some of the weight matrices W of the NN are trained through learning in accordance with the environment after the air conditioner is installed.

In the case of performing learning of the NN in advance, the information processing device 50 has only the inference process, of the learning process and the inference process, and at the time of inference, reads the weight matrices W stored in the storage unit 55 and performs calculation on the input signal from the infrared sensor 51. In the case of performing learning for some of the weight matrices W in accordance with the environment, the information processing device 50 performs the training of the NN as described in the above Embodiments 1 to 10.

In particular, in the case of an air conditioner, correct-answer labels are set for recognizing the structure of a room, for example, and a mechanism or the like for performing control while recognizing the distance between each living body and the air conditioner or a temperature and an air volume appropriate for each living body is provided. Regarding the structure of the room, for example, an object that does not exhibit temperature change is recognized as the room, furniture, or the like, and an object that exhibits temperature change is recognized as a door, a living body, or the like.

Regarding a temperature and an air volume appropriate for each living body, for example, a mechanism capable of recognizing the position of a controller is provided (e.g., a member for absorbing or reflecting infrared rays is provided at an end of the controller), and information obtained when each living body operates the controller of the air conditioner is used as correct-answer labels. At this time, by the NN, for example, processing is performed to extract and recognize features such as motions, body temperatures, and contours of different living bodies.

Besides, by the NN, for example, whether the target 58 is a living body or an object such as a cooking device may be determined on the basis of temperature change when a cool wind or a warm wind is blown to the target 58. Further, by the NN, whether or not to blow a wind to each living body may be determined by identifying the individual living body, or such determination that a wind is not blown to a cooking device may be made, for example.

The weight matrices W of the NN having undergone learning are stored in the storage unit 55, and they are used by being read from the storage unit 55 when the air conditioner is next started.

Further, before being inputted to the NN, as preprocessing, for example, image data may be normalized so that the maximum value becomes 1 and the minimum value becomes 0, or may be standardized so that the average of the image data becomes 0 and the variance thereof becomes 1. In addition, batch learning in which learning is performed only at the time of starting may be used, or online learning in which learning is performed as needed in accordance with the situation even during operation may be used.

In FIG. 21, a case where the air conditioner has one blower unit 52 has been shown. However, a plurality of blower units 52 may be provided. For example, two blower units 52 capable of performing outputs with different temperatures and different air volumes may be provided to form a mechanism for blowing a wind with a temperature and an air volume adapted to each living body in accordance with a processing result of the NN. In addition, with the two blower units 52, it is possible to stir air in the room appropriately, so as to adjust the temperature.

In addition, through the learning of the NN, it is also possible to identify each living body, and therefore it is possible to configure an air conditioner having various functions by combining such information. In addition, in a case where a plurality of living bodies are present at the same time, each blower unit 52 may be controlled to fix fins for adjusting the wind direction, and thus it is possible to keep blowing a wind with a temperature and an air volume appropriate for each living body continuously.

In general, in the air conditioner, an infrared sensor, a distance sensor, and the like are used in order to recognize an object present in the room, a person, opening/closing of a door, and the like. This system operates as the NN in which sensor signals from the infrared sensor and the like are received as input signals, and an object present in the room, a person, opening/closing of a door, and the like are outputted as output signals. In recent years, with improvement in the infrared sensor and the like, the amount of acquired information (the number of pixels) has increased and further, response is required in real time. This is increasingly requiring a large-size and large-power configuration of hardware for processing such information accordingly.

The air conditioner according to the present embodiment suppresses size increase and power increase, and enables increase in the processing speed. Therefore, power consumption can be reduced, an additional structure for heat dissipation is not needed, an indoor unit can be downsized, and efficiency of the indoor unit can be enhanced.

In a case of requiring large-scale calculation, conventionally, calculation is performed with a computer suitable for large-scale calculation such as a computer server through an information network such as the WWW, and a result from the computer is sent back to the air conditioner through the WWW. In the air conditioner according to the present embodiment, it is not necessary to use an information network such as the WWW, and power and a time lag due to such communication can be reduced, whereby it is possible to provide a more comfortable air conditioner system to a user.

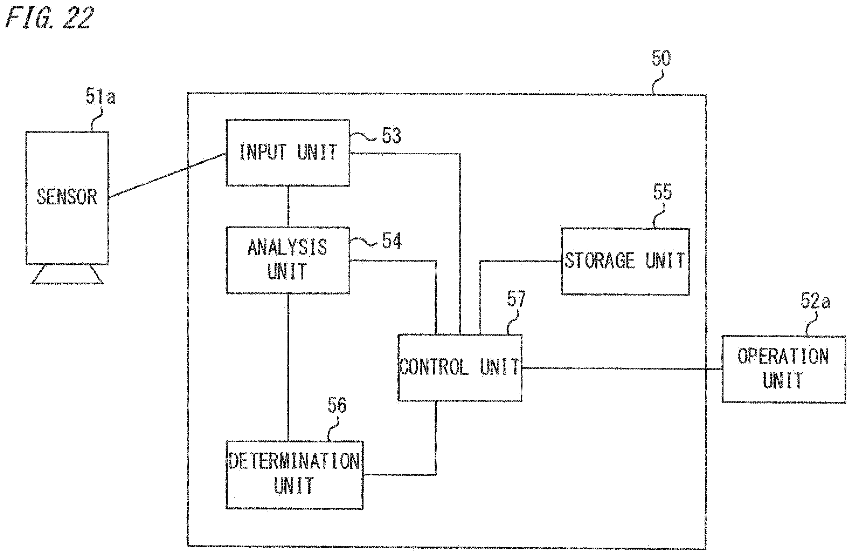

FIG. 22 is a diagram showing the configuration of an electronic apparatus forming a servo system, according to another example of the present Embodiment 11. The electronic apparatus includes the information processing device 50 according to the present invention, a sensor 51a for detecting electromagnetic waves, and an operation unit 52a. The information processing device 50 includes the input unit 53 for receiving data, the analysis unit 54 for analyzing data inputted from the input unit 53, the storage unit 55 for storing a result of analysis, the determination unit 56 for determining the analysis result, and the control unit 57 for controlling each unit.

The information processing device 50 controls at least one of operation stoppage or foreign material elimination for the operation unit 52a, using the control unit 57.

Also in this case, the analysis unit 54, the determination unit 56, and the control unit 57 as a whole have a function of the CPU 30 of the hardware 100 shown in FIG. 1, and the storage unit 55 has functions of the ROM 31 and the RAM 32 of the hardware 100.

Then, the information processing device 50 has a learning process in which an output signal from the sensor 51a is received as an input signal and at least one of an object position change amount, an electric field, a magnetic field, or a temperature is learned on the basis of the input signal, and an inference process for performing inference on the basis of the input signal using the information obtained through the learning process, and performs control operation on the basis of the inference process.

Also in this case, learning of the NN may be performed in advance, and the information processing device 50 has at least the inference process, of the learning process and the inference process, and reads and uses the weight matrices W stored in the storage unit 55 at the time of inference.

In general, in the information processing device provided to the servo system, through calculation using the NN, the positions of objects being produced using the servo system are monitored, and characters, colors, and barcodes indicated on the objects, presence/absence of malfunction thereof, and the like are analyzed. A signal read by a CCD or CMOS image sensor such as a camera, a near field antenna, or a far field antenna is inputted to the NN

Since the servo system operates at high speed, instantaneous determination is required and a CNN may be conventionally used, while, for fast processing, the search range is set to be small and the image size is reduced. By using the electronic apparatus according to the present embodiment for the servo system, it is possible to keep the same processing speed while treating large images. Therefore, it is possible to process information over a wide range with use of fewer sensors, and it is possible to achieve accuracy improvement using the NN having more layers.

In the servo system according to the present embodiment, it is not necessary to use an information network such as the WWW, and power and a time lag due to such communication can be reduced, whereby it is possible to provide a servo system capable of faster response, to a user.

The servo system is required to perform simultaneous control with a plurality of servomotors coordinated, and therefore real-time performance is important. In addition, in a case of abnormal operation, it is necessary to determine the situation instantaneously, and stop and restart the operation as needed. In the servo system according to the present embodiment, owing to fast response, it is possible to avoid manufacturing and operation in an abnormal case instantaneously. Therefore, waste products to be discarded can be decreased, and failures due to collision between devices or the like when a device operates at an abnormal posture, can be decreased.

An example of the electronic apparatus forming the servo system described above is an autonomous robot as shown below. The autonomous robot has, as the sensor 51a, at least one of a CCD or CMOS image sensor such as a camera, a near field antenna, or a far field antenna, and can monitor the position of an object and recognize at least one of a character, a color, or a barcode indicated on the object, thus making determination.

The sensor 51a is attached directly to the autonomous robot or therearound. The information processing device 50 has a learning process for performing learning about characters, colors, barcodes, or presence/absence of malfunction, on which noise that the sensor 51a itself has or noise depending on the usage environment of the sensor 51a is superimposed, on the basis of an input signal inputted from the sensor 51a, and an inference process for performing inference on the basis of the input signal using the information obtained through the learning process, and performs control operation on the basis of the inference process.

Also in this case, the information processing device 50 may have at least the inference process, of the learning process and the inference process, and in this case, the weight matrices W stored in the storage unit 55 are read and used at the time of inference.

Another example of the electronic apparatus including the information processing device 50 according to the present invention is a collision prevention device which is an on-vehicle device directed to automated driving of a vehicle. The configuration in this case is the same as in the case shown in FIG. 22, and the same effects, i.e., low power and fast response, are achieved.

The collision prevention device includes the information processing device 50 according to the present invention, the sensor 51a, and the operation unit 52a. The information processing device 50 includes the input unit 53 for receiving data, the analysis unit 54 for analyzing data inputted from the input unit 53, the storage unit 55 for storing the analysis result, the determination unit 56 for determining the analysis result, and the control unit 57 for controlling each unit.

The sensor 51a is for detecting vehicle-outside environment information serving as information for control operation, and as the sensor 51a, at least one of a CCD or CMOS image sensor such as a camera, a radar, or an ultrasonic sonar is used. In a case of a radar, a radar using a laser beam as in light detection and ranging (LiDAR), or a radar using millimeter waves, may be used. Further, instead of using a single sensor, a combination of different sensors or a plurality of the same sensors may be used, whereby safety in driving can be enhanced.

The information processing device 50 has a learning process for performing learning about at least one of the position of a living body outside the vehicle, the position and the advancing direction of a surrounding vehicle, traffic light information, or lane information, on the basis of an input signal inputted from the sensor 51a, and an inference process for performing inference on the basis of the input signal using the information obtained through the learning process, and performs control operation on the basis of the inference process. Also in this case, the information processing device 50 may have at least the inference process.

While the collision prevention device is capable of controlling steering, an accelerator, and a brake, outputs from the control unit 57 of the information processing device 50 are roughly classified into two types, i.e., issuing an alarm to a driver in an abnormal case, and controlling the vehicle without alarming the driver. Specific examples of the abnormal case include a case where it is detected that the vehicle deviates from the lane, a case where the distance to a preceding vehicle becomes short during traveling, and a case where there is a person or an object in the advancing direction (front, rear, left, or right) of the vehicle and collision is predicted.

In such a case, an alarm is issued to the driver by sound, light, or vibration, to notify the driver about abnormality. If it is determined that issuing an alarm to the driver is too late because, for example, the vehicle is traveling at high speed, the operation unit 52a directly controls the vehicle in accordance with a command from the control unit 57 of the information processing device 50.

Specifically, the information processing device 50 electrically controls the steering to avoid deviation from the lane, or drives the accelerator or the brake so as to control the distance to the preceding vehicle or a front, rear, left, or right object, for example. In addition, the information processing device 50 performs control for stopping the vehicle at a safe position while recognizing the situation around the vehicle, for example.

In the above collision prevention device, only the sensor 51a for detecting vehicle-outside environment information is provided. However, a sensor such as a visible-light or infrared camera may be further provided in the vehicle, and the driver's condition may be determined, whereby abnormality may be detected. Also in this case, using an output signal from the in-vehicle sensor as the input signal, calculation is performed by the information processing device 50, to determine the driver's condition, e.g., a sleeping state or a drunk state. In accordance with the determination, control is performed so as to issue an alarm to the driver by sound, light, or vibration, or stop the vehicle at a safe position while recognizing the situation around the vehicle, for example.

As still another example of the electronic apparatus including the information processing device 50 according to the present invention, an on-vehicle device capable of identifying and authenticating a driver and preventing theft of the vehicle, driving by a driver with no license, and the like, will be described below. The configuration in this case is also the same as in the case shown in FIG. 22.

The sensor 51a is mounted in the vehicle and detects the vehicle-inside environment information serving as information for control operation, and as the sensor 51a, at least one of a CCD or CMOS image sensor such as a camera is used.

The information processing device 50 has a learning process for performing learning about at least the face, of the face and the body shape of the driver, on the basis of an input signal inputted from the sensor 51a, and an inference process for performing inference on the basis of the input signal using the information obtained through the learning process, and performs control operation on the basis of the inference process.

In this case, the information processing device 50 has both of the learning process and the inference process, and can perform learning about a specific driver, identify and authenticate the driver, and allow only the driver to operate the vehicle. Considering the fact that the human's face and body shape are changed with the age, the information processing device 50 regularly updates information using online learning in which, every time data to be learned is inputted, learning is performed with the data added.

In the on-vehicle device according to the present embodiment, it is not necessary to use an information network such as the WWW, and irrespective of the connection environment with such a network, it is possible to instantaneously perform identification and authentication of the driver with a simple and low-cost configuration while saving energy.

Further, the electronic apparatus including the information processing device 50 according to the present invention may be applied as a monitoring camera. For example, a visible-light video from a camera as the sensor 51a is inputted to the information processing device 50, and the information processing device 50 outputs an ID assigned to each individual (in Japan, My Number, the passport number of a passport, etc.), for example. Besides, it is possible to monitor the individual behavior in real time by the monitoring camera.

In the present embodiment, it is not necessary to upload the video of the monitoring camera via an information network such as the WWW, and the information amount can be reduced through distributed processing by the information processing device 50. For example, conventionally, an information amount of 1 MB/s is processed per monitoring camera, but in the present embodiment, an information amount of 1 kB/s only has to be processed and thus the information, amount can be significantly reduced. Thus, it is possible to monitor the individual behavior easily and reliably.

In the electronic apparatus such as the on-vehicle device for identifying and authenticating the driver and the monitoring camera for monitoring the individual behavior as described above, an input signal based on reading by the CCD or CMOS image sensor is used and the behavior, the state, or the like of a person is an output signal. In a case where an image is used as input information, increase in the speed and enhancement of accuracy can be achieved by configuring the NN in a multilayered manner.

In this case, there are fewer constraints on power and usage of the computer as compared to the electronic apparatus such as the air conditioner or the servo system described above, and further, increase in the speed and enhancement of accuracy can be achieved by using the electronic apparatus according to the present embodiment. In particular, with the electronic apparatus using the NN to which Embodiment 10 is applied, accuracy can be effectively enhanced through calculations in both of the spatial domain and the spatial frequency domain.

In FIG. 21 and FIG. 22, the electronic apparatuses having the sensors 51 and 51a have been shown. However, the information processing device 50 according to the present invention is also applicable to an electronic apparatus not having such a sensor 51, 51a. In this case, a signal generated through calculation in the information processing device 50 is used as an input signal.

Also in this case, the information processing device 50 has at least the inference process, of the learning process for performing learning on the basis of the input signal and the inference process for performing inference on the basis of the input signal using the information obtained through the learning process, and performs the control operation on the basis of the inference process.

In addition to the above examples, the information processing device according to the present invention is applicable to an electronic apparatus that infers at least one of a character, a color, a light intensity, a dimension, a shape, a position, an angle, a positional change of an object due to a speed or an acceleration, an electric field, a magnetic field, or a temperature.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated. At least one of the constituent components mentioned in at least one of the preferred embodiments may be selected and combined with the constituent components mentioned in another preferred embodiment.

LIST OF REFERENCE SIGNS

| | |
|---|---|
| 2 | convolutional layer |
| 10A | log amplitude layer |
| 10B | inverse log amplitude layer |
| 10C | log axis layer |
| 11, 11A | input layer |
| 12, 12A | Fourier transform layer |
| 13A | amplitude connection layer |
| 13B | phase connection layer |
| 14 | complex activation layer |
| 15 | inverse Fourier transform layer |
| 16 | output layer |
| 18 | complex pooling layer |
| 20 | input signal |
| 21r | first amplitude signal |
| 21θ | first phase signal |
| 22r | second amplitude signal |
| 22θ | second phase signal |
| 50 | information processing device |
| 51 | infrared sensor |
| 51a | sensor |
| 100 | hardware |
| f | complex activation function |
| Lr, Lθ | minute matrix |
| W1 | first weight matrix |
| W2 | second weight matrix |

**Claims**

1. An information processing device for processing an input signal with a neural network, the information processing device comprising:

   - a Fourier transform layer for performing Fourier transform on the input signal and outputting a first amplitude signal and a first phase signal;
   - an amplitude connection layer for multiplying the first amplitude signal by a first weight matrix for which a value in the matrix is to be updated through training, and outputting a second amplitude signal;
   - a phase connection layer for multiplying the first phase signal by a second weight matrix for which a value in the matrix is to be updated through training, and outputting a second phase signal;
   - a complex activation layer for updating at least the second amplitude signal, of the second amplitude signal and the second phase signal, using a complex activation function f which is an activation function in a spatial frequency domain; and
   - an inverse Fourier transform layer for combining the second amplitude signal and the second phase signal updated in the complex activation layer, and performing inverse Fourier transform thereon.

2. The information processing device according to claim 1,
wherein at least one of each of the amplitude connection layer, the phase connection layer, and the complex activation layer is provided between the Fourier transform layer and the inverse Fourier transform layer, and signal processing in the spatial frequency domain is continuously performed between the Fourier transform layer and the inverse Fourier transform layer.

3. The information processing device according to claim 1 or 2,
wherein by a response of the complex activation function f with respect to a phase $\theta(i)$ at each point i in a matrix forming the second phase signal, the complex activation layer updates a value of an amplitude $r(i)$ at a point at the same position as the point i in a matrix forming the second amplitude signal and outputs the updated second amplitude signal, and outputs the second phase signal without updating the second phase signal.

4. The information processing device according to claim 1 or 2,
wherein with respect to a target signal which is at least the second amplitude signal of the second amplitude signal and the second phase signal, the complex activation function f used in the complex activation layer acts to update the target signal by generating such a minute matrix that frequency components which are axial-direction components of a matrix forming the target signal are decreased to 1/N and each element is decreased to 1/M, and adding the minute matrix to the matrix forming the target signal, N and M being integers satisfying $N \geq 2$ and $M \geq 1$, respectively.

5. The information processing device according to claim 1 or 2,
wherein the complex activation function f used in the complex activation layer acts to perform convolution operation on a target signal which is at least the second amplitude signal of the second amplitude signal and the second phase signal, using, as a kernel, a function of which an absolute value of a value at an origin as a reference is maximized.

6. The information processing device according to claim 3,
wherein the complex activation function f is a complex Relu function acting to update the value of the amplitude $r(i)$ in the second amplitude signal by a response that differs between a case where one of a real-axis component or an imaginary-axis component is positive or zero and a case where the one is negative, with respect to the phase $\theta(i)$ in the second phase signal.

7. The information processing device according to claim 6,
wherein the complex activation function f acts to keep the value of the amplitude $r(i)$ in a case of $(-\pi/2) \leq \theta(i) < (\pi/2)$ where the real-axis component is positive or zero, and change the value of the amplitude $r(i)$ to a value of $(r(i) \cdot |\sin\theta(i)|)$ or $(r(i) \cdot \sin\theta(i))$ in a case of $-\pi \leq \theta(i) < (-\pi/2)$ or $(\pi/2) \leq \theta(i) < \pi$ where the real-axis component is negative.

8. The information processing device according to claim 6,
wherein the complex activation function f acts to keep the value of the amplitude $r(i)$ in a case of $0 \leq \theta(i) < \pi$ where the imaginary-axis component is positive or zero, and change the value of the amplitude $r(i)$ to a value of $(r(i) \cdot |\cos\theta(i)|)$ or $(r(i) \cdot \cos\theta(i))$ in a case of $-\pi \leq \theta(i) < 0$ where the imaginary-axis component is negative.

9. The information processing device according to claim 3,
wherein the complex activation function f is a complex logistic function acting to update the value of the amplitude $r(i)$ in the second amplitude signal by a constant response using the same calculation expression irrespective of a magnitude of the phase $\theta(i)$ in the second phase signal.

10. The information processing device according to claim 4,
wherein the complex activation function f acts to update the target signal using a plurality of the minute matrices.

11. The information processing device according to claim 4 or 10,
wherein each of the N and M is a power of 2, and the minute matrix is calculated by performing shift operation.

12. The information processing device according to claim 5,
wherein the complex activation function f uses a sinc function as the function serving as the kernel, and acts to calculate an absolute value of a result obtained after the convolution operation on the target signal.

13. The information processing device according to any one of claims 1 to 12, further comprising a complex pooling layer directly after the complex activation layer, the complex pooling layer serving as a low-pass filter or a band-pass filter for, of the second amplitude signal and the second phase signal, the signal updated by the complex activation function f.

14. The information processing device according to any one of claims 1 to 13, further comprising:

   - a log amplitude layer for transforming an amplitude of the first amplitude signal to a logarithm, the log amplitude layer being provided at a stage after the Fourier transform layer; and
   - an inverse log amplitude layer for performing antilogarithm transform for the logarithm, the inverse log amplitude layer being provided at a stage before the inverse Fourier transform layer.

15. The information processing device according to any one of claims 1 to 14, further comprising a log axis layer for performing logarithm transform for axes of the first amplitude signal and the first phase signal, the log axis layer being provided at a stage after the Fourier transform layer.

16. The information processing device according to any one of claims 1 to 15, further comprising:

   - an input layer for receiving the input signal to be inputted to the neural network; and
   - an output layer for converting an inputted signal to a desired form and outputting a result thereof from the neural network, the output layer being provided at a stage after the inverse Fourier transform layer.

17. The information processing device according to claim 16,
   wherein the Fourier transform layer is provided at a stage before the input layer, for preprocessing for the neural network, so that the input signal is subjected to Fourier transform in the Fourier transform layer and then is inputted to the input layer.

18. The information processing device according to claim 16,
   further comprising at least one convolutional layer at least either between the input layer and the Fourier transform layer provided at a stage after the input layer, or between the inverse Fourier transform layer and the output layer provided at the stage after the inverse Fourier transform layer.

19. An electronic apparatus including the information processing device according to any one of claims 1 to 18 and performing control operation, the electronic apparatus comprising a sensor for detecting information for the control operation,
   wherein of a learning process in which an output signal from the sensor is used as the input signal and learning is performed on the basis of the input signal, and an inference process for performing inference on the basis of the input signal using information obtained through the learning process, the information processing device has at least the inference process, and performs the control operation on the basis of the inference process.

20. The electronic apparatus including the information processing device, according to claim 19,
   the electronic apparatus being an air conditioner which includes, as the sensor, an infrared sensor and is capable of controlling a wind direction, an air volume, and a temperature, wherein in the learning process, a position and temperature change of a living body are learned.

21. The electronic apparatus including the information processing device, according to claim 19,

   the electronic apparatus being an autonomous robot which includes, as the sensor, at least one of a CCD image sensor, a CMOS image sensor, a near field antenna, or a far field antenna, and is capable of monitoring a position of an object and identifying at least one of a character, a color, or a barcode indicated on the object, wherein
   in the learning process, a character, a color, a barcode, or presence/absence of malfunction on which noise that the sensor itself has or noise depending on a usage environment of the sensor is superimposed, is learned.

22. The electronic apparatus including the information processing device, according to claim 19,

   the electronic apparatus being an on-vehicle device which is capable of controlling steering, an accelerator, and a brake and which includes, as the sensor, at least one of a CCD image sensor, a CMOS image sensor, a radar, or an ultrasonic sonar and detects vehicle-outside environment information serving as information for the control operation, wherein

in the learning process, at least one of a position of a living body outside a vehicle, a position and an advancing direction of a surrounding vehicle, traffic light information, or lane information is learned.

23. The electronic apparatus including the information processing device, according to claim 19,

the electronic apparatus being an on-vehicle device which is capable of identifying and authenticating a driver and which includes, as the sensor, at least one of a CCD image sensor or a CMOS image sensor and detects vehicle-inside environment information serving as information for the control operation, wherein the information processing device has the learning process and the inference process, and

in the learning process, of a face and a body shape of the driver, at least the face is learned, and obtained information is regularly updated.

24. The electronic apparatus including the information processing device, according to claim 19,

the electronic apparatus being capable of detecting electromagnetic waves by the sensor and controlling at least one of operation stoppage or foreign material elimination,

wherein in the learning process, at least one of an object position change amount, an electric field, a magnetic field, or a temperature is learned.

25. An electronic apparatus including the information processing device according to any one of claims 1 to 18 and performing control operation, wherein of a learning process in which a signal generated through calculation is used as the input signal and learning is performed on the basis of the input signal, and an inference process for performing inference on the basis of the input signal using information obtained through the learning process, the information processing device has at least the inference process, and performs the control operation on the basis of the inference process.

*FIG. 1*

*FIG. 2*

```
┌─────────────────────────────┐
│         INPUT LAYER         │ ∼1
└─────────────────────────────┘
              ↓
┌─────────────────────────────┐
│      CONVOLUTIONAL LAYER     │ ∼2
└─────────────────────────────┘
              ↓
┌─────────────────────────────┐
│      ACTIVATION FUNCTION     │ ∼3
└─────────────────────────────┘
              ↓
┌─────────────────────────────┐
│      CONVOLUTIONAL LAYER     │ ∼2
└─────────────────────────────┘
              ↓
┌─────────────────────────────┐
│      ACTIVATION FUNCTION     │ ∼3
└─────────────────────────────┘
              ↓
┌─────────────────────────────┐
│         POOLING LAYER        │ ∼4
└─────────────────────────────┘
              ↓
┌─────────────────────────────┐
│      CONVOLUTIONAL LAYER     │ ∼2
└─────────────────────────────┘
              ↓
┌─────────────────────────────┐
│      ACTIVATION FUNCTION     │ ∼3
└─────────────────────────────┘
              ↓
┌─────────────────────────────┐
│     FULLY CONNECTED LAYER    │ ∼5
└─────────────────────────────┘
              ↓
┌─────────────────────────────┐
│      ACTIVATION FUNCTION     │ ∼3
└─────────────────────────────┘
              ↓
┌─────────────────────────────┐
│     FULLY CONNECTED LAYER    │ ∼5
└─────────────────────────────┘
              ↓
┌─────────────────────────────┐
│         OUTPUT LAYER         │ ∼6
└─────────────────────────────┘
              ↓
┌─────────────────────────────┐
│            OUTPUT            │ ∼7
└─────────────────────────────┘
```

*FIG. 3*

```
┌─────────────────────────────────────┐
│            INPUT  LAYER              │──11
└─────────────────────────────────────┘
                  │
                  ▼
┌─────────────────────────────────────┐
│       FOURIER  TRANSFORM  LAYER      │──12
└─────────────────────────────────────┘
                  │
                  ▼
       ┌─────────────────┬───────────────────┐
13A─── │    AMPLITUDE    │ PHASE CONNECTION   │
13 {   │ CONNECTION LAYER│      LAYER         │
13B─── └─────────────────┴───────────────────┘
                  │
                  ▼
┌─────────────────────────────────────┐
│       COMPLEX  ACTIVATION  LAYER     │──14
└─────────────────────────────────────┘
                  │
                  ▼
┌─────────────────────────────────────┐
│    INVERSE  FOURIER  TRANSFORM  LAYER│──15
└─────────────────────────────────────┘
                  │
                  ▼
┌─────────────────────────────────────┐
│            OUTPUT  LAYER             │──16
└─────────────────────────────────────┘
                  │
                  ▼
┌─────────────────────────────────────┐
│               OUTPUT                 │──17
└─────────────────────────────────────┘
```

*FIG. 4*

```
                              20              12
                  ┌──────────────────────────────────────────┐
                  │         FOURIER TRANSFORM LAYER           │
                  └──────────────────────────────────────────┘
                       │              13              │
     21r ──────────────┤         13A   13B            ├────────── 21θ
          ┌────────────────────────┐      ┌────────────────────────┐
          │  AMPLITUDE CONNECTION   │      │  PHASE CONNECTION LAYER │
          │         LAYER           │      │                         │
          │ ┌────────────────────┐  │      │ ┌────────────────────┐  │
          │ │FIRST WEIGHT MATRIX W1│ │      │ │ SECOND WEIGHT MATRIX │ │
          │ └────────────────────┘  │      │ │         W2          │ │
          └────────────────────────┘      └────────────────────────┘
     22r ──────────────┐                          ┌────────── 22θ
          ┌──────────────────────────────────────────┐
          │          COMPLEX ACTIVATION LAYER         │── 14
          │ ┌──────────────────────────────────────┐  │
          │ │    COMPLEX ACTIVATION FUNCTION f      │  │
          │ └──────────────────────────────────────┘  │
          └──────────────────────────────────────────┘
     23r ──────────────┐                          ┌────────── 22θ
          ┌──────────────────────────────────────────┐
          │       INVERSE FOURIER TRANSFORM LAYER     │── 15
          └──────────────────────────────────────────┘
                              │
                              25
```

FIG. 5

LINE
SYMMETRY

Ix

INPUT
IMAGE

y

ROTATIONAL
SYMMETRY

LINE
SYMMETRY

Iy

x

*FIG. 6*

22r, 23r        f        22 θ

r (xi, yi)             θ (xi, yi)

FIG. 7

FIG. 8

FIG. 9

FIG. 10

*FIG. 11*

INPUT LAYER ~11

FOURIER TRANSFORM LAYER ~12

13 { 13A — AMPLITUDE CONNECTION LAYER | PHASE CONNECTION LAYER
    13B —

COMPLEX ACTIVATION LAYER ~14

13 { 13A — AMPLITUDE CONNECTION LAYER | PHASE CONNECTION LAYER
    13B —

COMPLEX ACTIVATION LAYER ~14

INVERSE FOURIER TRANSFORM LAYER ~15

OUTPUT LAYER ~16

OUTPUT ~17

FIG. 12

EP 4 030 346 A1

*FIG. 13*

| Condition | time (CPU) |
|---|---|
| FIRST COMPARATIVE EXAMPLE: CNN | 260s |
| SECOND COMPARATIVE EXAMPLE: FFT and IFFT with each cycle | 200s |
| EMBODIMENT | 75s |

## FIG. 14

$$\overbrace{\begin{bmatrix} r(i) \end{bmatrix}}^{22r} + \overbrace{\begin{bmatrix} Lr(j) \end{bmatrix}}^{Lr}$$

$$\overbrace{\begin{bmatrix} \theta(i) \end{bmatrix}}^{22\theta} + \overbrace{\begin{bmatrix} L\theta(j) \end{bmatrix}}^{L\theta}$$

## FIG. 15

FOURIER TRANSFORM LAYER — 20, 12

21r, 13, 13A, 13B, 21 θ

AMPLITUDE CONNECTION LAYER
FIRST WEIGHT MATRIX W1

PHASE CONNECTION LAYER
SECOND WEIGHT MATRIX W2

22r, 22 θ

COMPLEX ACTIVATION LAYER — 14
COMPLEX ACTIVATION FUNCTION f

23r, 22 θ

COMPLEX POOLING LAYER — 18

23ra, 22 θ

INVERSE FOURIER TRANSFORM LAYER — 15

25

## FIG. 16

FOURIER TRANSFORM LAYER — 20, 12

AMPLITUDE CONNECTION LAYER — 13A
FIRST WEIGHT MATRIX W1

PHASE CONNECTION LAYER — 13B
SECOND WEIGHT MATRIX W2

13

21r, 21θ

22r, 22θ

COMPLEX BATCH NORMALIZATION LAYER — 19

22ra, 22θ

COMPLEX ACTIVATION LAYER — 14
COMPLEX ACTIVATION FUNCTION f

23r, 22θ

INVERSE FOURIER TRANSFORM LAYER — 15

25

## FIG. 17

## FIG. 18

## FIG. 19

```
                            ~20
                             │
        ┌────────────────────▼────────────────────┐
        │        FOURIER TRANSFORM LAYER          │──~12A
        └────────────────────┬────────────────────┘
                             │
 PREPROCESSING ↑             │
 ─────────────────────────────────────────────────── ─ ─ ─
    NN        ↓              │ ~21r, 21θ
        ┌────────────────────▼────────────────────┐
        │              INPUT LAYER                 │──~11A
        └────────────────────┬────────────────────┘
                             │ ~21r, 21θ
        ┌───────────────────┬▼────────────────────┐
  13A─┐ │    AMPLITUDE      │  PHASE CONNECTION    │
  13 │ │ CONNECTION LAYER   │       LAYER          │
  13B─┘ └────────────────────┴────────────────────┘
        ┌────────────────────▼────────────────────┐
        │        COMPLEX ACTIVATION LAYER          │──~14
        └────────────────────┬────────────────────┘
        ┌────────────────────▼────────────────────┐
        │         COMPLEX POOLING LAYER            │──~18
        └────────────────────┬────────────────────┘
        ┌────────────────────▼────────────────────┐
        │     INVERSE FOURIER TRANSFORM LAYER      │──~15
        └────────────────────┬────────────────────┘
        ┌────────────────────▼────────────────────┐
        │              OUTPUT LAYER                │──~16
        └────────────────────┬────────────────────┘
        ┌────────────────────▼────────────────────┐
        │                OUTPUT                    │──~17
        └─────────────────────────────────────────┘
```

*FIG. 20*

```
┌─────────────────────────────────────┐
│           INPUT LAYER               │──11
└─────────────────────────────────────┘
                  ↓
┌─────────────────────────────────────┐
│        CONVOLUTIONAL LAYER          │── 2
└─────────────────────────────────────┘
                  ↓
┌─────────────────────────────────────┐
│        ACTIVATION FUNCTION          │── 3
└─────────────────────────────────────┘
                  ↓
┌─────────────────────────────────────┐
│       FOURIER TRANSFORM LAYER       │──12
└─────────────────────────────────────┘
                  ↓
┌──────────────────┬──────────────────┐
│    AMPLITUDE     │ PHASE CONNECTION │  13A
│ CONNECTION LAYER │      LAYER       │  13B
└──────────────────┴──────────────────┘
                  ↓
┌─────────────────────────────────────┐
│       COMPLEX ACTIVATION LAYER      │──14
└─────────────────────────────────────┘
                  ↓
┌─────────────────────────────────────┐
│        COMPLEX POOLING LAYER        │──18
└─────────────────────────────────────┘
                  ↓
┌─────────────────────────────────────┐
│   INVERSE FOURIER TRANSFORM LAYER   │──15
└─────────────────────────────────────┘
                  ↓
┌─────────────────────────────────────┐
│           OUTPUT LAYER              │──16
└─────────────────────────────────────┘
                  ↓
┌─────────────────────────────────────┐
│             OUTPUT                  │──17
└─────────────────────────────────────┘
```

13 { 13A, 13B

61

FIG. 21

*FIG. 22*

EP 4 030 346 A1

**INTERNATIONAL SEARCH REPORT**

International application No.

PCT/JP2019/036101

A. CLASSIFICATION OF SUBJECT MATTER
Int. Cl. G06N3/04(2006.01)i, G06T7/00(2017.01)i

According to International Patent Classification (IPC) or to both national classification and IPC

B. FIELDS SEARCHED

Minimum documentation searched (classification system followed by classification symbols)
Int. Cl. G06N3/04, G06T7/00

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | KO, Jong Hwan et al., Design of an Energy-Efficient Accelerator for Training of Convolutional Neural Networks using Frequency-Domain Computation, Proceedings of the 54th Annual Design Automation Conference 2017, ACM [online], 2017 June 22 [retrieved on 15 November 2019], Retrieved from the Internet: URL:https://dl.acm.org/citation.cfm?id=3062228 | 1-2, 5, 12-13, 16-25 |
| A | | 3-4, 6-11, 14-15 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15.11.2019 | 26.11.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 4 030 346 A1**

REFERENCES CITED IN THE DESCRIPTION

**Patent documents cited in the description**

- JP 2017049996 A